# EUROPEAN PATENT SPECIFICATION

(11) **EP 2 850 426 B1**
(45) Date of publication and mention of the grant of the patent: **15.03.2017**
(21) Application number: 13790903.2
(22) Date of filing: 20.05.2013
(51) Int. Cl.: G01N 30/60, B01L 3/00

(54) **FITTING ASSEMBLY**
ANSCHLUSSANORDNUNG
ENSEMBLE RACCORD

(30) Priority: 18.05.2012 US 201213475852
(43) Date of publication of application: 25.03.2015
(73) Proprietor: Optimize Technologies, Inc., Oregon City, OR 97045 (US)
(72) Inventor: FORD, Douglas, W., Wilsonville, OR 97070 (US); DELINE, Robert, Corbett, OR 97019 (US)
(74) Representative: Körber, Martin Hans
(86) International application number: PCT/US2013/041901
(87) International publication number: WO 2013/173843

(56) References cited:
- KR-A- 20080 049 105
- US-A- 5 525 303
- US-A1- 2008 237 112
- US-A1- 2009 295 156
- US-A1- 2009 295 156
- US-A1- 2010 224 546
- US-A1- 2012 014 848

## Description

This application is a continuation-in-part of U.S. Patent Application No. 13/475852, which is a continuation-in-part of U.S. Patent Application No. 12/476,931, filed June 2, 2009, which claims the benefit of U.S. Provisional Patent Application No. 61/058,091, filed June 2, 2008. .

### BACKGROUND

Numerous types of equipment used for the analysis or purification of chemical compounds utilize miniature fluid conduits, such as metallic tubing, through which liquid samples pass. An analytical technique, such as liquid chromatography, uses a column (conduit) packed with a packing material in order to analyze and identify chemical properties of certain fluids. For example, an analyte may be introduced into one end of the column, and a carrier fluid then run through the column. The length of time that the analyte is retained within the column can enable analysis and identification of the analyte. A popular form of liquid chromatography is High Performance Liquid Chromatography (HPLC) in which the sample is pumped through the column under an elevated pressure, typically at 20 to 400 bar (300 to 6,000 psi). Another, relatively newer liquid chromatography form is Ultrahigh Pressure Liquid Chromatography (UHPLC) in which system pressure extends upward to 1400 bar or 20,000 psi, and possibly 2000 bar ( 30,000 psi). Both HPLC and UHPLC are examples of analytical instrumentation that utilize fluid transfer at elevated pressures.

Liquid chromatography systems, such as HPLC or UHPLC systems, typically include several components. For example, such a system may include a pump; an injection valve or autosampler for injecting the analyte; a precolumn filter to remove particulate matter in the analyte solution that might clog the column; a packed bed to retain irreversibly absorbed chemical material; the HPLC column itself; and a detector that analyzes the carrier fluid as it leaves the column. These various components may typically be connected by a miniature fluid conduit, such as metallic or polymeric tubing, usually having an internal diameter of 0.08 to 1.0 mm (0.003 to 0.040 inch).

All of these various components and lengths of tubing are typically interconnected by threaded fittings. Fittings for connecting various components and lengths of tubing are disclosed in prior patents and patent applications, for example, U.S. Patent Nos. 5,525,303; 5,730,943; 5,911,954; and 6,095,572; and U.S. Patent Application Publication No. 2008/0237112, filed on January 9, 2008.

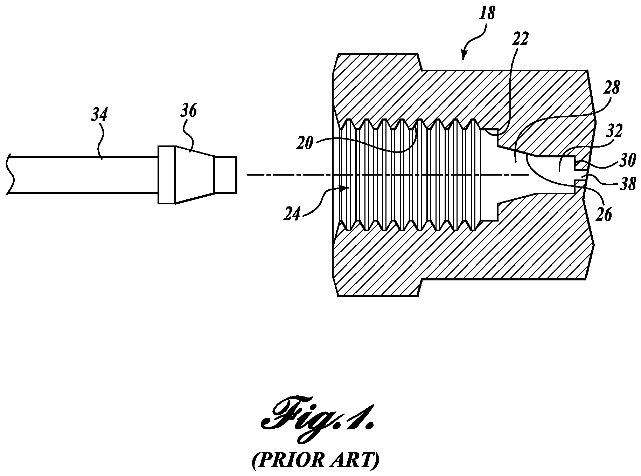

A typical threaded fitting 18 well known in the art is shown in FIGURE 1. The threaded fitting 18 includes an internally threaded portion 20 formed near its open end that is suitable for threadably receiving a second fitting, tightening device, etc., having an external threaded portion (not shown). The fitting 18 further includes an internal passageway 24 that narrows in diameter at its distal terminus to form a female, cone-shaped chamber 28 defining a frusto-conical sealing surface 26. The cone-shaped chamber 28 is in communication with a cylindrical chamber 32 sized to receive tubing 34 therein. The cylindrical chamber 32 defines a "tube stop" 30 at its end that closely and fully receives the tip of the tubing 34.

Often, the tubing interfaces with the threaded fittings with a ferrule or similar sealing device (see ferrule 36 in FIGURE 1). The ferrule includes a cone-shaped end that allows it to be compressed within the female cone-shaped chamber of the fitting and thus form a liquid-tight seal. As is well known in the art, the tubing must be seated on the bottom of the cylindrical chamber when the ferrule is received within the fitting in order to ensure good chromatography. This becomes even more critical in UHPLC where the negative effects are greater. If the tube is not bottomed out in the cylindrical chamber, the resulting chromatogram exhibits band broadening due to mixing of the sample with the mobile phase. The extra volume between the end of the tube and the cylindrical chamber bottom is known as "dead volume." It is preferred that all fitting connections after the pump be made as "zero-dead-volume" connections to keep band broadening to a minimum. Even in connections before the pump it can be critical that there is "zero-dead-volume" because the extra volume will change the exact nature of mixing solvents, giving a different delay volume from various fitting connections.

The ferrule also secures on the tubing to prevent the tubing from ejecting from the fitting at specified pressures. For instance, HPLC ferrules are typically rated for pressures up to 400 bar (6,000 psi), and UHPLC ferrules are typically rated for pressures up to 1400 bar (20,000 psi). In UHPLC systems, stainless steel tubing is often used to accommodate the high pressures. The ferrules are also typically made of stainless steel to properly seal against the tubing and to prevent the tubing from ejecting at the high pressures. When the ferrule is forced into the female cone-shaped chamber of the fitting, the ferrule swages down onto the tubing to prevent the tubing from ejecting from the fitting. However, with the ferrule being made of stainless steel, the ferrule swages onto the stainless steel tubing as a hard swage. As such, the position of the stainless steel ferrule cannot be readjusted on the tube, if, for instance, it is desired to use the tubing with a different fitting or component. Thus, if the stainless steel ferrule/tubing is reused in a fitting of a slightly different size, a "dead volume" is likely created between the end of the tube and the cylindrical chamber tube stop, or the ferrule cannot seat in the female cone-shaped chamber of the fitting, thereby causing the connection to leak.

In HPLC systems, a ferrule made of a softer material may be used such that a hard swage does not result. For instance, a ferrule made from Polyetheretherketone (PEEK) or another similar material may be used to seal the tubing within the fitting. The PEEK ferrule creates a soft swage on the tubing; and therefore, the position of the PEEK ferrule can be adjusted for use within different fittings. However, PEEK ferrules cannot withstand the extreme pressures of UHPLC systems.

Thus, it is desired to have a ferrule that can be re-used in various UHPLC fittings while maintaining a liquid-tight seal and preventing the tubing from ejecting at high pressures.

In certain HPLC and UHPLC systems, it is sometimes desirable to use an inert capillary tube that may include polymeric material or fused silica. For instance, the tubing may be comprised of polymeric-clad fused silica or fused silica with polymeric sleeves at the ends of the tubing. To be used within UHPLC systems, however, the tubing must be able to withstand extreme pressures in excess of 350 bar ( 5,000 psi) often approaching 1400 bar (20,000 psi) and beyond. In that regard, the UHPLC systems require fitting and ferrule assemblies to secure tubing in place while making and maintaining a leaktight seal.

As noted above, traditional stainless steel ferrules work on stainless steel tubing in a single-use fashion by swaging or crimping onto the tube to grip and hold the tube in place within the fitting, while at the same time forming a seal at the connection. If stainless steel ferrules (or similar ferrules) are used with fused silica tubing, it is desirable to sleeve or clad the fused silica tubing with an outer layer of polymer, such as PEEK. The PEEK outer sleeve provides a cushion between the stainless steel ferrule and the fused silica tube to prevent fracturing of the fused silica.

A polymeric ferrule, such as a PEEK ferrule, creates a soft swage on the tubing. Therefore, a PEEK ferrule or similar ferrule does not fracture or deform the more delicate tubing, such as polymeric-clad fused silica or fused silica with polymeric sleeves at the ends of the tubing. Moreover, the tubing can be repositioned with respect to the PEEK ferrule, and the position of the PEEK ferrule can be adjusted for use within different fittings.

However, PEEK ferrules in use with these tubings cannot withstand the extreme pressures of UHPLC systems. Higher pressures are difficult to achieve with polymer ferrules due to the limited gripping ability of the ferrules on the outer polymer layer of the tubing. At high pressures, the capillary tube ejects, resulting in a system failure. In addition, the polymeric ferrule may creep on the tubing over time due to its limited gripping ability or due to elevated temperatures, thereby necessitating retightening within the fitting to reinstate the grip of the ferrule on the capillary tube.

A wrench or similar tool may be used to tighten the fitting assembly and further compress the ferrule within the fitting assembly and onto the tubing, thereby increasing the pressure capabilities of PEEK or similar ferrules. However, by using a wrench to tighten the fitting, as opposed to tightening the fitting by hand, the tubing is often forced too tightly into the fitting port. For instance, referring to FIGURE 1, tubing 34 would be driven into the cylindrical chamber 32 and may abut up against the tube stop 30. If a more delicate material is used for the tubing, such as silica, the tubing may fracture due to the over tightening.

Thus, there is additionally a need for a fitting and/or ferrule assembly that grips and seals onto various types of tubes (such as stainless steel, polymer-clad fused silica, polymer-sleeved fused silica, etc.) used in HPLC and UHPLC systems without breaking or significantly deforming the tube.

### SUMMARY

A ferrule for use in a fluid transfer assembly having a fluid conduit is provided. The ferrule includes a frusto-conical seal portion having a tapered end and an enlarged end and a first cylindrical bore sized and configured to slidably receive a fluid conduit. The seal portion is formed from a first material suitable to seal the fluid conduit within a first fitting without substantially deforming the fluid conduit.

The ferrule further includes a frusto-conical collet portion having a tapered end and an enlarged end, wherein the enlarged end of the collet portion is mated with the enlarged end of the seal portion. The collet portion has a second cylindrical bore in substantial alignment with the first cylindrical bore and at least one axial finger extending along the tapered end that is configured to be biased into locking engagement with the fluid conduit. The collet portion is formed from a second material that substantially prevents deformation of the fluid conduit when the finger is biased into locking engagement with the fluid conduit.

A fitting assembly for use in a fluid transfer assembly includes a fluid conduit having a first fitting with first and second ends and a bore extending between the first and second ends for receiving the fluid conduit. The first end of the first fitting is configured to sealingly dispose a ferrule assembly within a second fitting in an engaged position. The fitting assembly further includes a third fitting having first and second ends and a bore extending between the first and second ends for receiving the fluid conduit. The first end of the third fitting is configured to sealingly dispose a collet assembly within the first fitting in an engaged position.

This summary is provided to introduce a selection of concepts in a simplified form that are further described below in the Detailed Description. This summary is not intended to identify key features of the claimed subject matter, nor is it intended to be used as an aid in determining the scope of the claimed subject matter.

### DESCRIPTION OF THE DRAWINGS

The foregoing aspects and many of the attendant advantages of the present disclosure will become more readily appreciated by reference to the following detailed description, when taken in conjunction with the accompanying drawings, wherein:
FIGURE 1 is a partial cross-sectional view of a prior art fitting assembly for use in fluid transfer assemblies;
FIGURE 2 is an isometric view of a first example of a hybrid ferrule for use in a fitting assembly;
FIGURE 3 is an exploded view of the hybrid ferrule of FIGURE 2;
FIGURE 4 is cross-sectional view of the hybrid ferrule of FIGURE 2, taken substantially across line 4-4;
FIGURE 5A is a partial cross-sectional view of a first example not covered by the present invention of a fitting assembly for use in fluid transfer assemblies shown in a first position, wherein the hybrid ferrule of FIGURE 2 is received within the fitting assembly;
FIGURE 5B is a partial cross-sectional view of the fitting assembly of FIGURE 5A shown in a second position;
FIGURE 6 is an isometric view of a first exemplary embodiment of a fitting assembly for use in fluid transfer assemblies, wherein the fitting assembly is shown in use with the hybrid ferrule of FIGURE 2 and a single-ended collet;
FIGURE 7 is an exploded view of the fitting assembly of FIGURE 6;
FIGURE 8A is a cross-sectional view of the fitting assembly of FIGURE 6 shown in a first position;
FIGURE 8B is a cross-sectional view of the fitting assembly of FIGURE 6 shown in a second position;
FIGURE 8C is a cross-sectional view of the fitting assembly of FIGURE 6 shown in a third position;
FIGURE 9 is a cross-sectional view of a second example not covered by the present invention of a fitting assembly for use in fluid transfer assemblies, wherein the fitting assembly is shown in use with a ferrule and a single-ended collet;
FIGURE 10 is a cross-sectional view of a second exemplary embodiment of a fitting assembly for use in fluid transfer assemblies, wherein the hybrid ferrules of FIGURES 2 is shown in use with the fitting assembly;
FIGURE 11 is a cross-sectional view of a third exemplary embodiment of a fitting assembly for use in fluid transfer assemblies, wherein the hybrid ferrule of FIGURE 2 and a double-ended collet are shown in use with the fitting assembly;
FIGURE 12 is an isometric front view of a second example of a hybrid ferrule for use with a fitting assembly;
FIGURE 13 is an isometric rear view of the hybrid ferrule of FIGURE 12;
FIGURE 14 is an exploded view of the hybrid ferrule of FIGURE 12;
FIGURE 15 is cross-sectional view of the hybrid ferrule of FIGURE 12, taken substantially across line 15-15;
FIGURE 16 is a cross-sectional view of a fourth exemplary embodiment of a fitting assembly for use in fluid transfer assemblies, wherein the hybrid ferrules of FIGURES 2 and 12 are shown in use with the fitting assembly;
FIGURE 17 is a cross-sectional view of a fifth exemplary embodiment of a fitting assembly for use in fluid transfer assemblies, wherein the hybrid ferrule of FIGURE 12 and a double-ended collet are shown in use with the fitting assembly;
FIGURE 18 is an isometric front view of a third example of a hybrid ferrule for use with a fitting assembly;
FIGURE 19 is an isometric rear view of the hybrid ferrule of FIGURE 18;
FIGURE 20 is an exploded view of the hybrid ferrule of FIGURE 18;
FIGURE 21 is cross-sectional view of the hybrid ferrule of FIGURE 18, taken substantially across line 21-21; and
FIGURE 22 is a cross-sectional view of a sixth exemplary embodiment of a fitting assembly for use in fluid transfer assemblies, wherein the hybrid ferrule of FIGURE 18 and a single-ended collet are shown in use with the fitting assembly.

### DETAILED DESCRIPTION

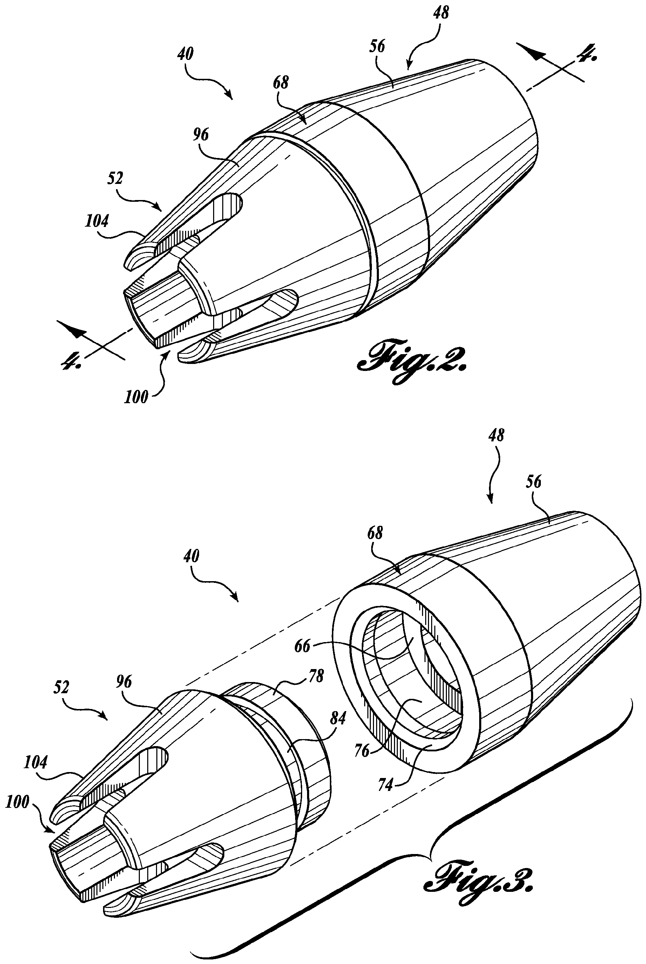

Referring to FIGURES 2-4, a hybrid ferrule 40 formed in accordance with a first example not covered by the present invention is depicted. The hybrid ferrule 40 is suitable for use in fluid transfer assemblies for scientific instruments such as HPLC and UHPLC systems. For ease of description and illustration, the hybrid ferrule 40 will be hereinafter described as being used in a portion of the first example not covered by the present invention of a UHPLC fitting assembly 44. However, it should be appreciated that the hybrid ferrule 40 may instead be used in any suitable system or assembly. Thus, the description hereinafter provided should not be seen as limiting the scope of the claimed subject matter.

Referring still to FIGURES 2-4, the hybrid ferrule 40 will now be described in detail. The hybrid ferrule 40 includes a seal portion 48 mated with a collet portion 52. The seal portion 48 is formed from a material suitable for sealing within the UHPLC fitting assembly 44, such as Polyetheretherketone (PEEK), and the collet portion 52 is formed from a material suitable for gripping onto the tubing of the fitting assembly 44, such as hardened Titanium alloy. The design and materials of the hybrid ferrule 40 allow the ferrule 40 to seal within a threaded fitting and withstand the extreme pressures of UHPLC, while at the same time being adjustable and reusable within various fittings, as will become apparent from the description below.

The seal portion 48 and collet portion 52 define first and second interior axial bore portions 60 and 62, respectively. The first and second interior axial bore portions 60 and 62 are substantially identical in diameter and cross-sectional shape such that when aligned, the first and second interior axial bore portions 60 and 62 define a substantially smooth interior cylindrical passageway 64 of constant diameter. In the alternative, the first and second interior axial bore portions 60 and 62 may instead define seal portion 48 and collet portion 52 interior surfaces that are textured, grooved, threaded, etc., to aid in gripping onto the exterior surface of the tubing 34. The interior cylindrical passageway 64 is configured to slidably receive a portion of a UHPLC fluid conduit therein. Preferably, the interior cylindrical passageway 64 receives stainless steel tubing 34 of a predetermined outer diameter having an internal fluid passageway 42. It should be appreciated that the first and second interior axial bore portions 60 and 62 may be any suitable size to define an interior cylindrical passageway 64 of a suitable diameter for receiving tubing of a desired size, material, etc., for different applications.

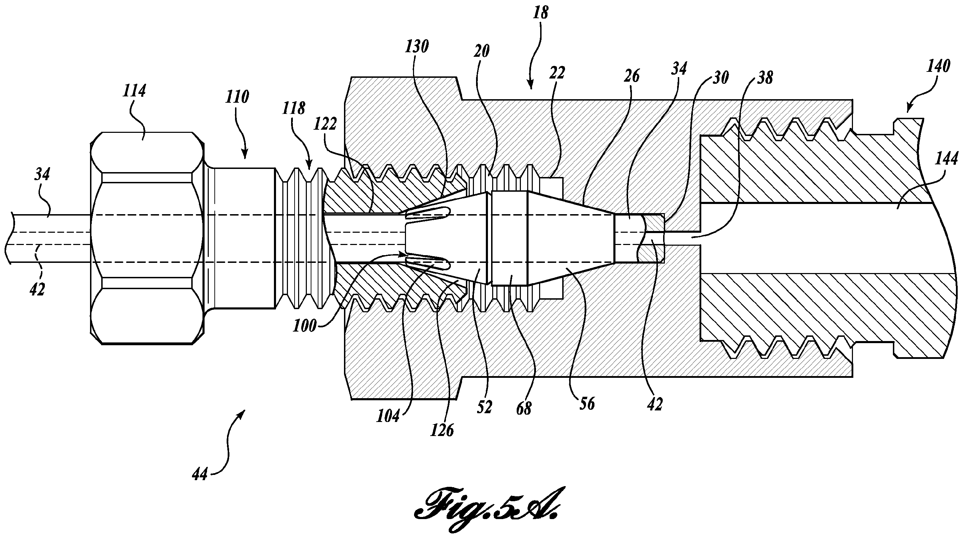

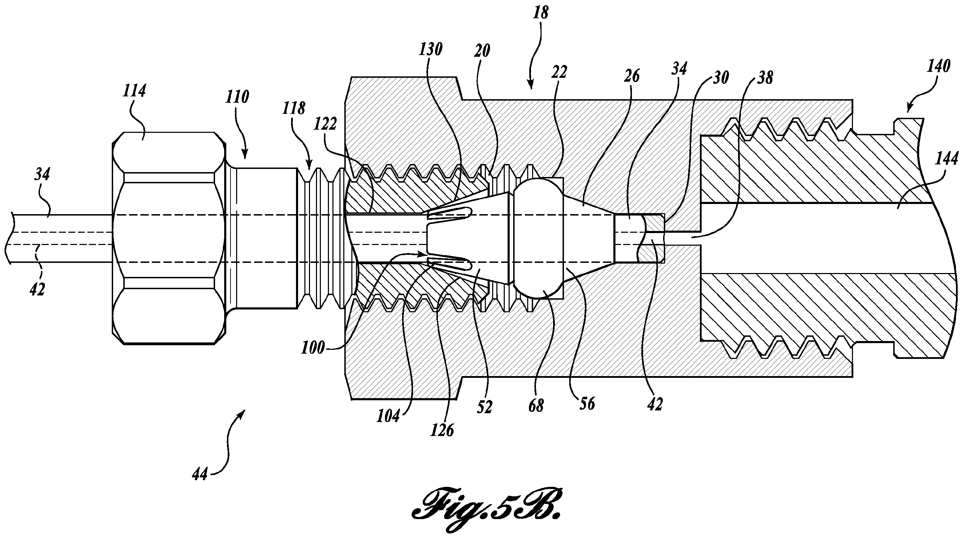

Both the seal portion 48 and the collet portion 52 are of a generally frusto-conical or cone shape to define a double-ended hybrid ferrule 40 when mated together. The seal portion 48 includes a tapered end 54 and an enlarged end 58, wherein the enlarged end 58 defines a transverse end surface 66. An exterior, substantially smooth tapered surface 56 extends from the enlarged end 58 to the tapered end 54 such that the seal portion 48 is suitably sized and shaped to be received within a portion of a threaded fitting. More specifically, the seal portion 48 is configured to be tightly received within the female, cone-shaped chamber 28 of the well known threaded fitting 18 described above with respect to FIGURE 1 (the same threaded fitting 18 is shown in FIGURES 5A and 5B in which the first example not covered by the present invention is described, and will be described in further detail below).

Moreover, with the seal portion 48 being made from a suitable material such as PEEK, the seal portion seals against the fitting 18 and around the stainless steel tubing 34 to form a liquid-tight seal without deforming the stainless steel tubing 20. In this manner, the seal portion 48 forms a soft swage on the tubing 20 so that the hybrid ferrule 40 can be repositioned on the tubing 34 and reused in other fittings.

Preferably, the seal portion 48 defines a forty degree cone such that it is suitably adapted to be received within a variety of well-known threaded fittings similar to the fitting shown in FIGURES 1, 5A, and 5B. Such threaded fittings are readily available from a variety of well known manufacturers, such as Optimize Technologies, Inc., Swagelok Company, Parker Hannifin Corp, Valco instruments Company Inc., Rheodyne and Upchurch Scientific (both part of the IDEX Health & Science Group), etc. For instance, the seal portion 48 may receive a 1.6 mm (1/16th inch) outer diameter tubing and fit within a standard 1.6 mm (1/16th inch) swaged fitting. It should be appreciated that the seal portion 48 may instead be larger or smaller in size to fit within various fittings for different applications.

The seal portion 48 further includes an annular collet-engaging protrusion 68 that extends axially from the end surface 66 of the seal portion 48. The annular collet-engaging protrusion 68 defines a substantially cylindrical outer surface 72 that extends from the tapered surface 56 of the of the seal portion 48. The cylindrical outer surface 72 includes a center longitudinal axis that is substantially collinear with the cylindrical passageway 64 of the hybrid ferrule 40. It should be appreciated that the outer surface 72 of the annular collet-engaging protrusion 68 may instead be curved or any other suitable contour. The annular collet-engaging protrusion 68 includes an inwardly extending lip 74 on its distal end that defines an annular receptacle or groove 76 between the lip 74 and the enlarged end surface 66 of the seal portion 48. The groove 76 is sized and configured to receive a lip 78 of a correspondingly shaped protrusion 82 of the collet portion 52.

The protrusion 82 of the collet portion 52 extends axially outwardly from a transverse end surface 92 of the collet portion 52 such that its center longitudinal axis is substantially collinear with the cylindrical passageway 64 of the hybrid ferrule 40. Moreover, the inner surface of the protrusion 82 extends from and is in substantial alignment with the surface of the second interior axial bore portion 62. In this manner, the interior surface of the cylindrical passageway 64 remains substantially smooth and of constant diameter such that the hybrid ferrule 40 may slidably receive a portion of UHPLC tubing or other suitable tubing therein. The lip 78 extends outwardly from the protrusion 82 to define an annular receptacle or groove 84 between the lip 78 and the end surface 92 of the collet portion 52. The groove 84 is sized and shaped to receive the lip 78 of the protrusion 68 extending from the seal portion 48.

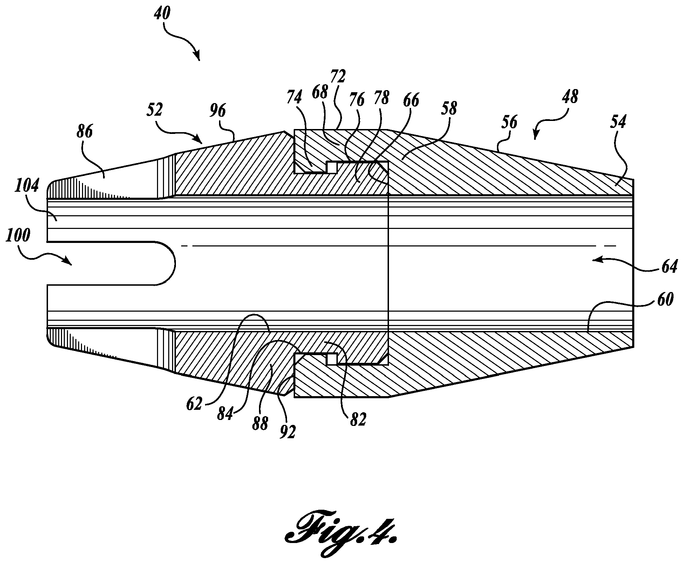

As shown in FIGURE 4, the collet portion 52 is secured to the seal portion 48 by mating the protrusion 82 of the collet portion 52 with the protrusion 68 of the seal portion 48. More specifically, the lip 78 of protrusion 82 is received within annular groove 76, and the lip 74 of protrusion 68 is received within annular groove 84. In this manner, the collet portion 52 and seal portion 48 are "snap fit" together to define the hybrid ferrule 40. With the collet portion 52 being made from Titanium and the seal portion 48 being made from PEEK, the collet portion 52 and seal portion 48 are preferably permanently secured together once assembled. In any event, it is preferred that the seal portion 48 be sufficiently secured to the collet portion 52 such that the hybrid ferrule 40 remains intact (the seal portion 48 remains connected to the collet portion 52) when removing the hybrid ferrule 40 from the fitting 18. Moreover, it should be appreciated that the seal portion 48 may instead be molded or otherwise formed on the collet portion 52 in any manner well known in the art.

As stated above, the collet portion 52 is of a generally frusto-conical or cone shape. Similar to the seal portion 48, the collet portion 52 includes a tapered end 86 and an enlarged end 88, wherein the enlarged end 88 defines a transverse end surface 92. An exterior, substantially smooth tapered surface 96 extends from the enlarged end 88 to the tapered end 86 such that the collet portion 52 is suitably sized and shaped to be received within a portion of a second fitting, or threaded nut 110. More specifically, and as shown in FIGURES 5A and 5B, the collet portion 52 is configured to be tightly received, or wedged within the female, cone-shaped chamber 126 of a well known externally torqued hexagonal nut 110. The nut 110 is threadably engageable with the threaded fitting 18 to compress and secure the collet potion 52 onto the tubing 34. Preferably, the collet portion 52 is configured to be received within the female, cone-shaped chamber 126 of an OPTI-LOK EXP 10-32 Hex Head Male Nut, available from Optimize Technologies, Inc., of Oregon City, Oregon. However, it should be appreciated that any other suitable nut, fitting, tightening device, or clamping device may be used to suitably compress the collet portion 52 onto the tubing 34.

The collet portion 52 further includes a plurality of axial slots 100 extending from the tapered end 86 along at least a portion of the collet portion 52 to define a plurality of axially extending fingers 104. Preferably, the collet portion 52 includes four axial slots 100 spaced equidistant from one another circumferentially about the tapered end 86 of the collet portion 52 to define four substantially identical axially extending fingers 104. However, it should be appreciated that any suitable number of axially extending fingers 104 may be used. In any event, it is preferred that a suitable number of fingers be defined and the fingers be of a suitable width and length such that they may be deformed onto the tubing 34 when engaged by the nut 110 without breaking off from the collet portion 52.

The fingers 104 deform or contract radially onto the tubing 34 when an external axial force is exerted on the fingers 104 by the female, cone-shaped chamber 126 of the nut 110. In this manner, the collet portion 52 is secured onto the tubing 34 to prevent the tubing 34 from ejecting at extreme pressures. With the collet portion 52 being made from a Titanium alloy or another suitable material, the fingers 104 spring back into their original position when the nut 110 is disengaged from the collet portion 52 such that the tubing 34 may be readjusted or removed from the ferrule 40. In addition, the collet portion 52 does not form a hard swage on the stainless steel tubing 34.

Moreover, as stated above, the seal portion 48 is made from PEEK or another suitable material such that it may seal within the fitting 18 without forming a hard swage on the tubing 34. Thus, the hardened Titanium collet portion 52 married to the softer PEEK seal portion 48 provides a hybrid ferrule 40 that seals in the female, cone-shaped chamber 28 of the fitting 18 while providing the grip necessary to prevent the stainless steel tube 34 from ejecting at high pressures. Moreover, the hybrid Titanium PEEK ferrule 40 secures onto the tubing without swaging irreversibly onto the tubing 34.

Thus, the hybrid ferrule 40 provides the necessary grip to withstand extreme pressures while providing the adjustability to be used in fittings of different sizes and tolerances. The adjustability feature is desirable, for example, when using either different 1.6 mm (1/16th inch) female pieces from the same manufacturer or when using 1.6 mm (1/16 inch) female
fittings from different manufacturers. In the first case, there are slight differences with respect to the tube stop depth because of manufacturing tolerances, and the hybrid ferrule 40 needs to be repositioned on the tubing 34 to enable the tubing to bottom out in the cylindrical chamber 32 of the fitting 18. In the second instance, with different manufacturer's dimensions, the tube stop depth may differ by as much as .040 inches. Without the use of the hybrid ferrule 40, the tubing would either bottom out before the ferrule could engage the frusto-conical sealing surface 26 of the cone-shaped chamber 28 to make a seal, or the tubing would be off the bottom of the cylindrical chamber 32 measurably. Thus, the adjustability of the hybrid ferrule 40 enables the ferrule 40 to be reused in various fittings.

Referring to FIGURES 5A and 5B in which the first example not covered by the invention is described, a description of the hybrid ferrule 40 in use with a portion of the UHPLC fitting assembly 44 will be hereinafter described. The UHPLC fitting assembly 44 includes a fitting 18 as described above with respect to FIGURE 1. More specifically, the threaded fitting 18 includes an internally threaded portion 20 formed near a first open end that is suitable for threadably receiving the external threads of the nut 110. The fitting 18 further includes a female, cone-shaped chamber formed at its distal, internal end that defines a frusto-conical sealing surface 26. The cone-shaped chamber is in communication with a cylindrical chamber sized to receive the end of the tubing 34 therein.

The fitting 18 further includes a passage 38 that is in communication with the cylindrical chamber and aligns with the fluid passageway 42 of the tubing 34 when the tubing is received within the cylindrical chamber. The fitting 18 may be threadably connected to a connection device 140 at a second open end of the fitting for placing the tubing 34 into communication with, for instance, a column, trap, etc., received within a cylindrical opening 144 in the connection device 140. It should be appreciated that the connection device 140 may be any suitable device used in UHPLC systems or other suitable systems.

To assemble the fitting assembly 44, the tubing 34 is inserted within the cylindrical bores of the nut 110 and the hybrid ferrule 40, and the tubing 34 is thereafter inserted into the fitting 18. The tubing 34 is moved into the fitting 18 until the tubing 34 is received within the cylindrical chamber of the female port such that the tubing is substantially bottomed out against the tube stop 30. Thereafter, the nut 110 may be tightened within the fitting to secure the hybrid ferrule 40 in its position on the tubing 34 and to define a liquid-tight seal between the tubing 34 and the fitting 18.

As described briefly above, the nut 110 is a well known externally torqued hexagonal nut that is threadably engageable with the threaded fitting 18 to compress and secure the collet potion 52 of the hybrid ferrule 40 onto the tubing 34. The nut 110 includes an enlarged end 114 that may be hex-shaped or any other suitable contour such that the nut 110 may be easily tightened within the fitting either by hand or with a suitable tool. The nut includes a threaded portion 118 extending from the enlarged end 114 and a cylindrical bore 122 extending axially along the center of the nut 110. The cylindrical bore 122 widens at the threaded end of the nut to define a frusto-conical chamber 126 having a collet-engaging surface 130.

The frusto-conical chamber 126 is sized and shaped to engage the collet portion 52 of the hybrid ferrule 40 and exert an axial force on the collet portion 52 as the nut 110 is tightened into the fitting 18. As shown in FIGURE 5A, the collet-engaging surface 130 engages the fingers 104 of the collet portion 52 to compress the fingers 104 onto the tubing 34 as the nut 110 is tightened. At the same time, the collet portion 52 imparts an axial force against the seal portion 56 to drive the seal portion into sealing engagement with the frusto-conical sealing surface 26 of the fitting 18. More specifically, referring back to FIGURE 4, the protrusion 82 of the collet portion 52 engages and imparts an axial force on the end surface 66 of the seal portion 48 to drive the seal portion 48 into sealing engagement against the frusto-conical sealing surface 26 of the fitting 18. As such, the seal portion 48 is sealingly engaged with the fitting 18 while the collet portion 52 is secured on the tubing 34.

When it is desired to remove the tubing 34 from the fitting 18, the nut 110 is loosened until the collet-engaging surface 130 of the nut 110 no longer substantially engages the fingers 104 of the collet portion 52. When this occurs, the fingers 104 spring back into their original state such that the tubing 34 may slide out from within the hybrid ferrule 40. Moreover, when the nut 110 and tubing 34 are removed from the fitting 18, the hybrid ferrule 40 may be removed from the fitting 18 for use in a different application or fitting. If the seal portion 56 is "stuck" within the cone-shaped portion of the fitting 18, the seal portion 48 may be pulled out of sealing engagement with the fitting 18 by pulling on the collet portion 52.

Referring to FIGURE 5B, when the nut 110 is over-tightened within the fitting 18, the protrusion 82 of the collet portion 52 imparts an axial force on the end surface 66 of the seal portion 48 to further compress the seal portion 48. Because the seal portion 48 is made from PEEK or another suitable material, the over tightening causes a section of the seal portion 48 external of the cone-shaped portion of the fitting 18 to bulge outwardly into the space defined by the threaded and non-threaded portions 20 and 22 of the fitting 18. Such over tightening does not adversely affect the sealing properties of the sealing portion 48. Moreover, when it is desired to remove the tubing 34 from the fitting, the hybrid ferrule 40 can be removed from the fitting in one piece and can be re-used in its deformed state in another fitting. Thus, even when the nut 110 is fully tightened within the fitting 18, the hybrid ferrule properly seals within the fitting and secures on the tubing 34 to function in UHPLC systems.

Thus, it can be seen from the foregoing that the hybrid ferrule 40 constructed of a PEEK seal portion 48 secured to a Titanium collet portion 52 provides a ferrule that remains secured on tubing when used in extreme pressure systems while maintaining a liquid- tight seal within the fittings, wherein the ferrule may be re-used or adjusted within the fitting to accommodate various applications, fitting sizes, etc.

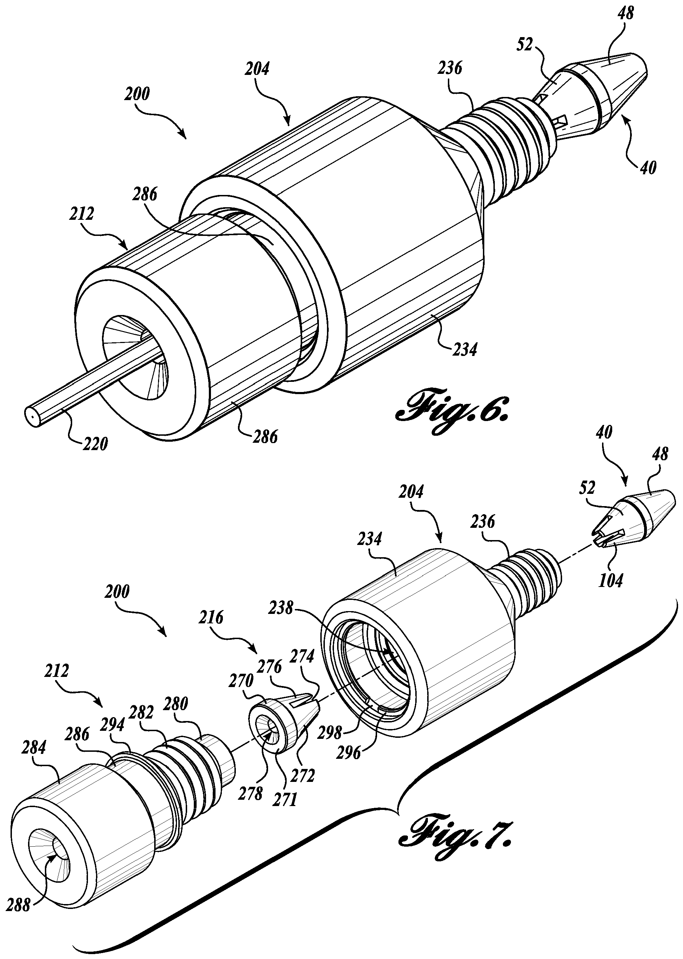

A first exemplary embodiment of a UHPLC fitting assembly 200 suitable for use with the hybrid ferrule 40 may best be seen by referring to FIGURES 6 and 7. Generally described, the UHPLC fitting assembly 200 is configured to suitably grip onto various types of HPLC and UHPLC fluid conduits or tubing and seal the tubing within the fitting assembly 200 without damaging or significantly deforming the tubing. For instance, the UHPLC fitting assembly 200 is suitable for gripping and sealing onto polymer-clad fused silica tubing (e.g., PEEKsil™ tubing available from SGE Analytical Science of Austin, Texas), polymer-sleeved fused silica tubing, or other types of tubing made from silica, borosilicate, glass silicates, etc., (hereinafter collectively referred to as "silica tubing" or a "silica conduit"), stainless steel, nickel, or other metal tubing, or other suitable types of tubing used in HPLC and UHPLC systems without breaking or significantly deforming the tube.

It should be appreciated that any suitable tubing may be used with the UHPLC fitting assembly 200. Moreover, although the UHPLC fitting assembly 200 will be described as being tightened by hand, in some embodiments the UHPLC fitting assembly 200 may be configured to be tightened with a tool, such as a wrench. It should further be appreciated that while the UHPLC fitting assembly 200 is described for use with the collet 216 and the hybrid ferrule 40, the fitting assembly 200 may instead be used with other suitable collets and ferrule assemblies. Moreover, although the fitting assembly 200 is described as a UHPLC assembly, suitable for use in fluid transfer assemblies at 30,000 PSI or higher, the fitting assembly 200 may also be adapted for use for HPLC assemblies. Thus, the descriptions and illustrations provided herein should not be seen as limiting the scope of the claimed subject matter.

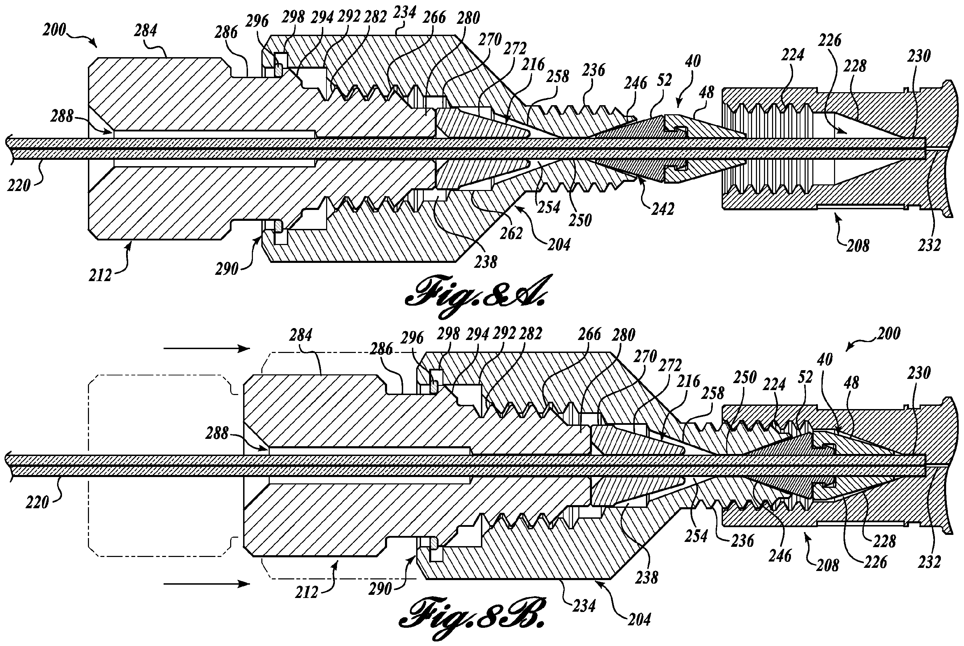

Referring to FIGURES 6, 7, and 8A, the UHPLC fitting assembly 200 will now be described in detail. The UHPLC fitting assembly 200 includes a first fitting, or a threaded housing 204 that is engageable with a second fitting, or a threaded fitting 208 (see FIGURE 8A), wherein a ferrule assembly, such as the hybrid ferrule 40 is sealingly disposed between the threaded housing 204 and the threaded fitting 208. A third fitting, or a captured lock nut 212 is received within the threaded housing 204 opposite the threaded fitting 208, with a collet assembly, such as a collet 216 sealingly disposed between the lock nut 212 and the threaded housing 204.

Referring specifically to FIGURE 8A, the threaded fitting 208 includes an internally threaded portion 224 formed near a first open end that is suitable for engaging external threads of the threaded housing 204. The threaded fitting 208 further includes a female, cone-shaped chamber 226 formed at its distal, internal end that defines a frusto-conical sealing surface 228. The cone-shaped chamber 226 is in communication with a cylindrical chamber 230 sized to receive the end of the tubing 220 therein. The threaded fitting 208 further includes a passage 232 that is in communication with the cylindrical chamber 230 and aligns with the fluid passageway of the tubing 220 when the tubing 220 is received within the cylindrical chamber 230. The threaded fitting 208 may be configured to place the tubing 220 into communication with, for instance, a column, trap, etc., at a second end of the threaded fitting (or through a suitable connection device).

Referring additionally to FIGURES 6 and 7, the threaded housing 204 is engageable with the threaded fitting 208 to secure the hybrid ferrule 40 therebetween in an "engaged" position. The threaded housing 204 includes an enlarged end 234 at a first end that is cylindrical in shape and includes a roughened or knurled outer surface (not depicted). In this manner, the enlarged end 234 may be used to easily tighten the threaded housing 204 by hand or with a suitable tool. It should be appreciated that the enlarged end 234 may instead be another suitable overall shape, such as hex-shaped, for tightening the threaded housing 204 by hand or with a suitable tool.

The threaded housing 204 includes an externally threaded portion 236 extending from the enlarged end 234 to define a second end of the threaded housing 204, and an axial bore 238 extending between the first and second ends. The externally threaded portion 236 is configured to be threaded into the internally threaded portion 224 of the threaded fitting 208 into the "engaged" position.

The axial bore 238 extends through the threaded housing 204 and widens at the second end to define a female, first frusto-conical chamber 242 having a collet-engaging surface 246. The first frusto-conical chamber 242 is sized and shaped to engage the collet portion 52 of the hybrid ferrule 40 and exert an axial force on the collet portion 52 as the threaded housing 204 is tightened within the threaded fitting 208 in the engaged position. By exerting an axial force on the collet portion 52, the threaded housing 204 compresses the fingers of the collet portion 52 (not labeled in FIGURES 6, 7, and 8A-8C) and secures the collet portion 52 of the hybrid ferrule 40 into releasable locking engagement on the tubing 220. At the same time, the collet portion 52 imparts an axial force against the seal portion 48 to drive the seal portion 48 into sealing engagement with the frusto-conical sealing surface 228 of the threaded fitting 208. As such, the seal portion 48 is sealingly engaged with the threaded housing 204 while the collet portion 52 is releasably secured on the tubing 220.

The threaded housing 204 is configured to exert an axial force on the hybrid ferrule 40 when it is threaded into the threaded fitting 208 in the engaged position. Similarly, the lock nut 212 is configured to impart an axial force on the collet 216 when it is threaded into the threaded housing 204 in an "engaged" position. In that regard, the threaded housing 204 includes a second frusto-conical chamber 254 disposed opposite the first frusto-conical chamber 242 that opens toward the first end of the threaded housing 204. The second frusto-conical chamber 254 is configured to sealingly receive the collet 216 therein. An axial cylindrical chamber 250 extends between the first and second frusto-conical chambers 242 and 254 to receive the tubing 220 therein.

The second frusto-conical chamber 254 transitions into a first enlarged cylindrical axial bore portion 262, which transitions into a threaded axial bore portion 266 of larger interior diameter than the first enlarged cylindrical axial bore portion 262. The threaded axial bore portion 266 defines a first open end of the threaded housing 204 at the enlarged end 234 of the threaded housing 204.

The threaded housing 204 is configured to receive a portion of the lock nut 212 within its first open end so that the lock nut 212 may impart an axial force on the collet 216. In that regard, the lock nut 212 includes an enlarged end 284 at a first end that is cylindrical in shape and includes a roughened or knurled outer surface (not depicted). In this manner, the enlarged end 284 may be used to easily tighten the lock nut 212 by hand or with a suitable tool. It should be appreciated that the enlarged end 284 may instead be another suitable overall shape, such as hex-shaped, for tightening the lock nut 212 by hand or with a suitable tool.

The lock nut 212 further includes an externally threaded portion 282 defined near the second end of the lock nut 212, and a reduced diameter portion 286 extending between the externally threaded portion 282 and the enlarged end 284. An axial bore 288 extends within the interior of the lock nut 212 between the first and second open ends for receiving the tubing 220. The externally threaded portion 282 of the lock nut 212 is configured to be threaded into the internally threaded axial bore portion 266 of the threaded housing 204 to move the lock nut 212 into the engaged position.

A cylindrically-shaped collet-engaging portion 280 extends from the externally threaded portion 282 to define the second end of the lock nut 212. The collet-engaging portion 280 is sized and configured to be received within the first enlarged cylindrical bore portion 262 of the threaded housing 204 such that the collet-engaging portion 280 may engage the collet 216. More specifically, a transverse end surface (not labeled) defined on the collet-engaging portion 280 engages a transverse end surface 271 defined on the collet 216.

The collet 216 is substantially similar to the collet portion 52 of the hybrid ferrule 40. The collet 216 is made from a Titanium alloy or another suitable material and is generally of a frusto-conical or cone shape. The collet 216 includes an annular nut-engaging portion 270 at one end and a tapered portion 272 extending therefrom, with an axial bore 278 extending between the opposite ends. The annular nut-engaging portion 270 defines a transverse end surface 271 that is engageable by the collet-engaging portion 280 of the lock nut 212.

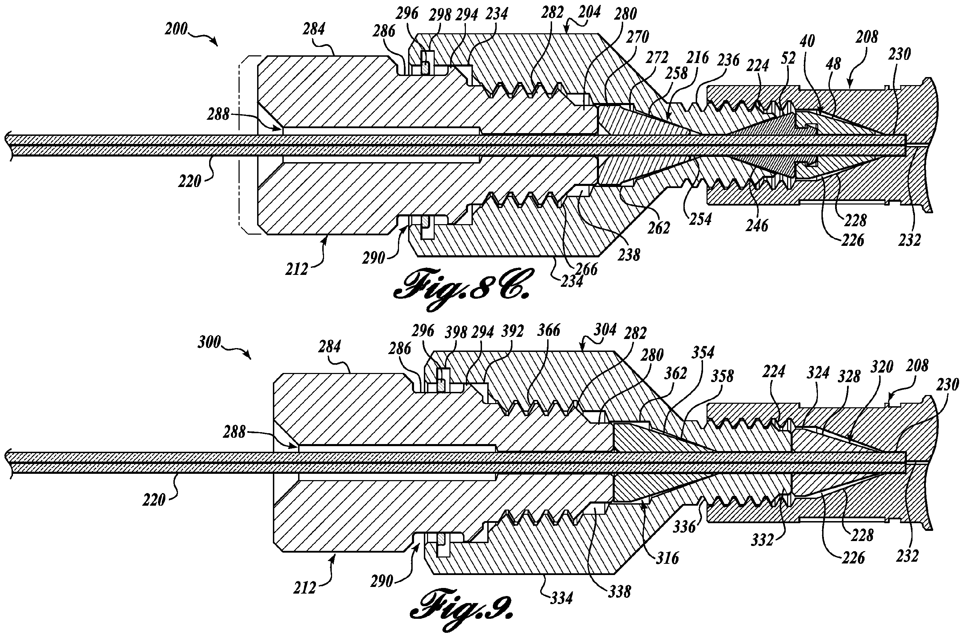

The tapered portion 272 of the collet 216 is suitably sized and shaped to be sealingly received within the second frusto-conical chamber 254 of the threaded housing 204. More specifically, and as shown in FIGURE 8C, the tapered portion 272 is configured to be tightly received, or wedged within the female, second frusto-conical chamber 254 of the threaded housing 204. The lock nut 212 engages the annular nut-engaging portion 270 to impart an axial force on the collet 216 to drive the tapered portion 272 into the second frusto-conical chamber 254, thereby sealing the collet 216 within the frusto-conical chamber 254.

At the same time, the collet 216 is compressed into releasably locking engagement on the tubing 220 to suitably grip onto the tubing 220. In that regard, the tapered portion 272 further includes a plurality of axial slots 274 extending along the tapered portion 272 that define a plurality of axially extending fingers 276. The axially extending fingers 276 are of a suitable size, shape, and number such that the fingers may deform onto the tubing 220 when engaged by the lock nut 212 without breaking off from the collet 216.

The fingers 276 deform or contract radially onto the tubing 220 when an external force is exerted on the fingers 276 by the female, second frusto-conical chamber 254 of the threaded housing 204. In this manner, the collet 216 is releasably secured onto the tubing 220 to prevent the tubing 220 from ejecting at extreme pressures. With the collet portion 220 being made from a Titanium alloy or another suitable material, the fingers 276 spring back into their original position when the lock nut 212 is disengaged from the collet 216 such that the tubing 220 may be readjusted or removed from the collet 216. In addition, the collet 216 does not form a hard swage on the tubing 220. The interior surface of the collet 216 extending along the axial bore 278 may further include texture, grooves, threading, etc., to aid in gripping onto the surface of the tubing 220.

It should be appreciated that although the collet 216 is described as being made from a Titanium alloy or another suitable material such that its fingers 276 may deform, the collet 216 may instead be made from stainless steel, glass, a polymeric material, such as PEEK, Nylon, or any other suitable materials. For instance, if the collet 216 was made from PEEK, it would form a soft swage onto the tubing 220, which would prevent damage to the tubing 220 when gripping onto the tubing 220. Moreover, the collet 216 may be made from a combination of materials, such as glass or a suitable metal (such as Titanium alloy) molded within a polymeric material. For example, metal pieces may be molded within a polymeric material so that the metal protrudes partially into the axial bore of the collet. In this manner, the metal would aid in gripping onto the tubing, while the polymeric material would form a soft swage on the tubing. Furthermore, a plurality of collets formed from glass, metal, etc. may be molded within a housing formed from a polymeric material or another suitable material to further distribute the gripping load along the tubing. Thus, it should be appreciated that the collet 216 described and illustrated herein is exemplary only, and the claimed subject should not be seen as limited in scope.

The annular nut-engaging portion 270 of the collet 216 may have substantially the same outer diameter as the inner diameter of the first enlarged cylindrical axial bore portion 262 of the threaded housing 204. In this manner, as the collet 216 is moved toward the second frusto-conical chamber 254, the tapered portion 272 of the collet 216 is aligned axially on the tubing 220. With the collet 216 in axial alignment with the tubing 220, the collet 216 may suitably grip onto the tubing 220 and seal against the collet-engaging surface 258 of the second frusto-conical chamber 254.

Likewise, the collet-engaging portion 280 of the lock nut 212 may have substantially the same outer diameter as the inner diameter of the first enlarged cylindrical axial bore portion 262. In this manner, the collet-engaging portion 280 may extend within the first enlarged cylindrical axial bore portion 262 when driving the collet 216 axially within the second frusto-conical chamber 254. Moreover, the transverse end surface of the collet-engaging portion 280 may be sized to engage substantially the entire transverse end surface 271 of the collet 216, thereby applying a substantially uniform, distributed force to the collet 216.

As noted above, the lock nut 212 is movable into an engaged position by engaging the externally threaded portion 282 of the lock nut 212 with the internally threaded axial bore portion 266 of the threaded housing 204. The fitting assembly 200 may also include a lock nut capture assembly 290 configured to retain the lock nut 212 within the interior of the threaded housing 204, when the externally threaded portion 282 of the lock nut 212 is disengaged from the internally threaded axial bore portion 266 of the threaded housing 204, or in a "disengaged" position.

The lock nut capture assembly 290 is defined by a second enlarged cylindrical axial bore portion 292 formed within the first end of the threaded housing 204. The inner diameter of the second enlarged cylindrical axial bore portion 292 is larger than the outer diameter of the reduced diameter portion 286 of the lock nut 212. In this manner, the lock nut 212 may be moved axially within the interior of the threaded housing 204 into the engaged position.

The lock nut 212 includes an annular protrusion 294 formed on the outer surface of the reduced diameter portion 286. The annular protrusion 294 is configured to engage an annular retaining clip 296 received within an annular receptacle 298 defined within the interior surface of the second enlarged cylindrical bore portion 292. In this regard, when the externally threaded portion 282 of the lock nut 212 is disengaged from the internally threaded axial bore portion 266 of the threaded housing 204 (i.e., in a disengaged position), the annular retaining clip 296 will retain or capture the lock nut 212 within the threaded housing 204.

It should be appreciated that any other suitable lock nut capture assembly 290 may instead be used to capture the lock nut 212 within the threaded housing 204. Moreover, it should be appreciated that in some embodiments, the lock nut capture assembly 290 may not be used such that the lock nut 212 is removable from the threaded housing 204 in the disengaged position.

Referring to FIGURES 8A-8C, the operation of the fitting assembly 200 will now be described in detail. Referring first to FIGURE 8A, the fitting assembly 200 is shown with threaded housing 204 disengaged from the threaded fitting 208, and with the lock nut 212 disengaged from the threaded housing 204. Tubing 220 extends through the longitudinal axial bore of the fitting assembly 200 (defined by the axial bores of the lock nut 212, the collet 216, the threaded housing 204, and the hybrid ferrule 40) and protrudes from the hybrid ferrule 40. The tubing 220 is moved into the threaded fitting 208 until the tubing 220 is substantially bottomed out within the cylindrical chamber 230, as shown in FIGURE 8A.

Referring to FIGURE 8B, with the collet portion 52 of the hybrid ferrule 40 positioned within the first frusto-conical chamber 242 of the threaded housing 204, the threaded housing 204 is tightened within the threaded fitting 208 to move the threaded housing 204 into the engaged position. Tightening the threaded housing 204 within the threaded fitting 208 secures the hybrid ferrule 40 in its position on the tubing 220 and defines a liquid-tight seal between the tubing 220 and the threaded fitting 208.

More specifically, by tightening the threaded housing 204 within the threaded fitting 208 (i.e., in the engaged position), the threaded housing 204 imposes an axial force on the collet portion 52 of the hybrid ferrule 40 through the collet-engaging surface 246. The collet portion 52 drives the PEEK seal portion 48 into sealing engagement with the frusto-conical sealing surface 228 of the threaded fitting 208. At the same time, the collet-engaging surface 246 compresses the fingers of the collet portion 52 onto the tubing 220 to securely position the hybrid ferrule 40 on the tubing 220.

The threaded housing 204 may be hand-tightened within the threaded fitting 208 rather than using a tool, such as a wrench. If a tool was use to over-tighten the threaded housing 204 within the threaded fitting 208, the PEEK seal portion 48 of the hybrid ferrule 40 can deform, as described above with respect to FIGURE 5B. Deformation of the seal portion 48 can cause the tubing 220 to be driven further into the cylindrical chamber 230, which can cause the tubing to fracture. Thus, when the tubing is made of more delicate materials (such as silica), hand tightening is preferred. However, it should be appreciated that a tool may be used to tighten the threaded housing 204 within the threaded fitting 208 with the same amount of force used for hand-tightening.

With the threaded housing 204 hand-tightened within the threaded fitting 208 in the engaged position to secure the hybrid ferrule 40 onto the tubing 220, the hybrid ferrule 40 can withstand fluid pressures of up to about 1000 bar (15,000 psi). To increase the fluid pressure capabilities of the fitting assembly 200, the lock nut 212 is moved into the engaged position, or it is tightened within the threaded housing 204 to secure the collet 216 onto the tubing 220 and to seal the collet 216 within the threaded housing 204.

Referring to FIGURE 8C, the lock nut 212 is tightened within the threaded housing 204 by gripping and turning the enlarged portion 284 of the lock nut 212. In certain embodiments, the threading is configured such that only about one quarter (1/4) of a turn is needed to fully tighten the lock nut 212 within the threaded housing 204 (i.e., moved into the engaged position).

When moved into the engaged position, the collet-engaging portion 280 of the lock nut 212 imparts an axial force onto the annular nut-engaging portion 270 of the collet 216. The collet 216 is driven into engagement with the collet-engaging surface 258 of the second frusto-conical chamber 254 to seal the collet 216 within the second frusto-conical chamber 254. At the same time, the collet-engaging surface 258 compresses the fingers 276 of the collet 216 onto the tubing 220 to securely position the collet 216 on the tubing 220. When the collet 216 is compressed onto the tubing 220, the collet 216 grips onto the tubing 220 without driving the tubing 220 further towards the hybrid ferrule 40 (and therefore, further within the cylindrical chamber 230). Moreover, as noted above, with the threaded housing 204 tightened within the threaded fitting 208 in the engaged position, the tubing 220 is securely positioned within the hybrid ferrule 40. As such, the tubing 220 is not driven further into the cylindrical chamber 230, preventing any fracturing of the end of the tubing 220.

In that regard, the threaded housing 204 may be either hand-tightened within the threaded fitting 208 or may instead be tightened with a tool. Hand-tightening the threaded housing 204 within the threaded fitting 208 will sufficiently compress the collet 216 onto the tubing 220. However, because there is no danger of driving the tubing 220 further into the cylindrical chamber 230 (with the possibility of fracturing the tubing 220), a tool may instead be used.

The gripping force of the collet 216 in addition to the hybrid ferrule 40 enables the fitting assembly 200 to withstand fluid pressures up to about 30,000 psi and higher. Moreover, the gripping load is distributed over two areas of the tubing 220, rather than point loading at only a single ferrule assembly, which can cause damage to the tubing. It should be appreciated that the fitting assembly 200 may be modified to include additional collet and ferrule assemblies for gripping onto the tubing 220. In this manner, the gripping load may be distributed over three or more areas of the tubing 220. By distributing the load over three of more areas of the tubing, the fitting assembly 200 may be able to withstand fluid pressures much greater than 2000 bar (30,000 psi) . Thus, it should be appreciated that the fitting assembly 200 may be adapted or modified to include less or more areas of distributed load for the intended application.

To remove or otherwise reposition the tubing 220 within the fitting assembly 200, the lock nut 212 is loosened by hand (or with a tool, depending on how originally tightened) to loosen the grip of the collet 216 on the tubing 220 and move the lock nut 212 into the disengaged position. With the lock nut 212 in the disengaged position, the fingers 276 of the collet 216 may spring back to their original, undeformed state (see FIGURE 8B).

Similarly, the threaded housing 204 is loosened by hand to loosen the grip of the hybrid ferrule 40 on the tube 220 and move the threaded housing 204 into the disengaged position. The threaded housing 204 may be removed from within the threaded fitting 208, thereby allowing the fingers of the collet portion 52 of the hybrid ferrule 40 to spring back to their original, undeformed state (see FIGURE 8A). With the collet 216 and hybrid ferrule 40 loosely disposed on the tubing 220, the position of the fitting 200 may be readjusted on the tubing 220, or a new fitting may be used with the same tubing 220.

Referring to FIGURE 9, a second example not covered by the present invention of a UHPLC fitting assembly 300 will now be described. The fitting assembly 300 is configured to suitably grip onto various types of HPLC and UHPLC tubing and seal the tubing within the fitting assembly 300 without damaging or significantly deforming the tubing. For instance, the UHPLC fitting assembly 300 is suitable for gripping and sealing onto stainless steel tubing, silica tubing, or other suitable types of tubing used in HPLC and UHPLC systems without breaking or significantly deforming the tubing.

The fitting assembly 300 is substantially similar to the fitting assembly 200 described above except for the differences hereinafter provided. In that regard, reference numerals used to describe and illustrate components of the fitting assembly 200 have been used for description and illustration of the fitting assembly 300 where the components are substantially identical.

The fitting assembly 300 differs from fitting assembly 200 described above in that the hybrid ferrule 40 is not disposed within the threaded fitting 208. Rather, a ferrule 320 is received within the threaded fitting 208 for engaging and sealing against the frusto-conical sealing surface 228 of the cone-shaped chamber 226. The ferrule 320 includes an annular fitting-engaging portion 324 at a first end of the ferrule 320 that defines a transverse end surface (not labeled). The transverse end surface of the fitting-engaging portion 324 is engageable by a portion of the threaded housing 304 to drive the ferrule 320 into the threaded fitting 208 when the threaded housing 304 is in an engaged position. A tapered portion 328 extends from the fitting-engaging portion 324 that is engageable with the frusto-conical sealing surface 228. The ferrule 320 may be comprised of a polymeric material, such as PEEK, to seal against the frusto-conical sealing surface 228. Moreover, the polymeric ferrule 320 forms a soft swage as it grips onto the tubing 220, thereby preventing any damage to the tubing 220.

The threaded housing 304 is substantially similar to threaded housing 204 described above. In that regard, the threaded housing 304 is configured to receive a collet 316 in a second frusto-conical chamber 354, wherein the collet 316 is substantially similar to collet 216 described above. In that regard, when the collet 316 is driven into the second frusto-conical chamber 354 and compressed onto the tubing 220, the collet 316 grips onto the tubing 220 without driving the tubing 220 further towards the ferrule 320 (and therefore, further within the cylindrical chamber 230). As such, the tubing 220 is not driven further into the cylindrical chamber 230, preventing any fracturing of the end of the tubing 220.

However, the threaded housing 304 does not include a first frusto-conical chamber at its second end. Rather, the second end is defined by a ferrule-engaging portion 332 that is configured to engage and impart an axial force on the ferrule 320. The ferrule-engaging portion 332 defines a transverse end surface (not labeled) that is engageable with the transverse end surface of the fitting-engaging portion 324 of the ferrule 320.

The gripping force of the collet 316 in addition to the ferrule 320 enables the fitting assembly 200 to withstand higher fluid pressures than if the ferrule 320 was used alone. Moreover, the gripping load is distributed over two areas of the tubing 220, rather than point loading at only a single ferrule assembly, which can cause damage to the tubing 220.

To remove or otherwise reposition the tubing 220 within the fitting assembly 300, the lock nut 212 is loosened by hand (or with a tool, depending on how originally tightened) to loosen the grip of the collet 316 on the tubing 220. The lock nut 212 is loosened until it moves into the disengaged position, thereby allowing the fingers of the collet 316 to spring back to their original, undeformed state.

Similarly, the threaded housing 304 is loosened by hand to loosen the grip of the ferrule 320 on the tubing 220. The threaded housing 304 may be removed from within the threaded fitting 208, thereby allowing the polymeric ferrule 320 to be removed from within the threaded fitting 208 and the tubing 220. With the collet 316 and ferrule 320 loosely disposed on the tubing 220, the position of the fitting 300 may be readjusted on the tubing 220, or a new fitting may be used with the same tubing 220.

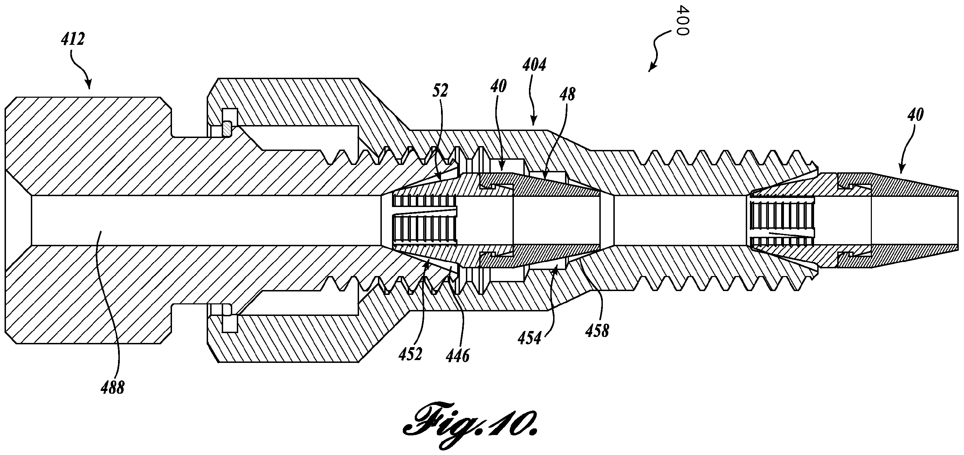

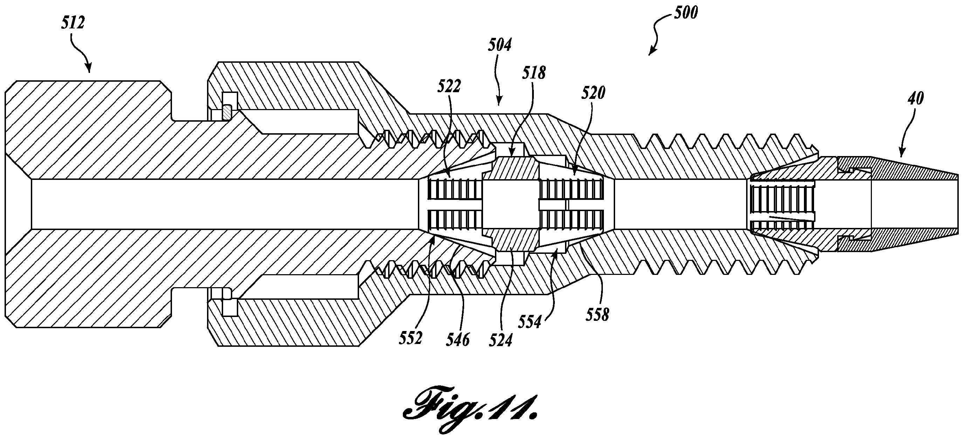

Referring to FIGURES 10 and 11, second and third exemplary embodiments of UHPLC fitting assemblies 400 and 500, respectively, suitable for use with the hybrid ferrule 40 will now be described. Generally described, the UHPLC fitting assemblies 400 and 500 are configured to suitably grip onto various types of HPLC and UHPLC fluid conduits or tubing and seal the tubing within the fitting assemblies 400 and 500 without damaging or significantly deforming the tubing. For instance, the UHPLC fitting assemblies 400 and 500 are suitable for gripping and sealing onto polymer-clad fused silica tubing (e.g., PEEKsil™ tubing available from SGE Analytical Science of Austin, Texas), polymer-sleeved fused silica tubing, other types of silica tubing, stainless steel, nickel, or other metal tubing, or other suitable types of tubing used in HPLC and UHPLC systems without breaking or significantly deforming the tube. It should be appreciated that any suitable tubing may be used with the UHPLC fitting assemblies 400 and 500.

Moreover, the UHPLC fitting assemblies 400 and 500 may be tightened by hand, in some embodiments the UHPLC fitting assemblies 400 and 500 may be configured to be tightened with a tool, such as a wrench. It should further be appreciated that while the UHPLC fitting assemblies 400 and 500 are described for use with the hybrid ferrule 40 and/or a double-ended collet 518, the fitting assemblies 400 and 500 may instead be used with other suitable collets, ferrules, or collet and/or ferrule assemblies. Moreover, although the fitting assemblies 400 and 500 are described as UHPLC assemblies, suitable for use in fluid transfer assemblies at 2000 bar (30,000 psi) or higher, the fitting assemblies 400 and 500 may also be adapted for use for HPLC assemblies. Thus, the descriptions and illustrations provided herein should not be seen as limiting the scope of the claimed subject matter.

The fitting assemblies 400 and 500 are substantially similar to the fitting assembly 200 described above except for the differences hereinafter provided. In that regard, reference numerals used to describe and illustrate components of the fitting assembly 200 have been used for description and illustration of the fitting assemblies 400 and 500 where the components are substantially identical.

Referring first to FIGURE 10, the UHPLC fitting assembly 400 will now be described. Similar to the UHPLC fitting assembly 200, the UHPLC fitting assembly 400 includes a first fitting, or a threaded housing 404 that is engageable with a second fitting (not shown), such as threaded fitting 208 shown in FIGURE 8A. A ferrule assembly, such as the hybrid ferrule 40 is sealingly disposable between the threaded housing 404 and the second fitting. A third fitting, or a captured lock nut 412 is received within the threaded housing 404 opposite the threaded fitting 208. In the UHPLC fitting assembly 200, a collet 216 is disposed between the lock nut 212 and the threaded housing 204. In the UHPLC fitting assembly 400, however, a hybrid ferrule 40 is sealingly disposed between the lock nut 412 and the threaded housing 404.

In that regard, the axial bore 488 extending within the interior of the lock nut 412 between its first and second open ends (for receiving tubing) widens at the second end to define a female, third frusto-conical chamber 452 having a collet-engaging surface 446. The female, third frusto-conical chamber 452 is substantially identical to the first frusto-conical chamber 242 described above with reference to fitting assembly 200. As such, the second frusto-conical chamber 452 is sized and shaped to engage the collet portion 52 of the hybrid ferrule 40 and exert an axial force on the collet portion 52 as the lock nut 412 is tightened within the threaded housing 404.

By exerting an axial force on the collet portion 52, the lock nut 412 compresses the fingers of the collet portion 52, and it secures the collet portion 52 of the hybrid ferrule 40 into releasable locking engagement on the tubing (not shown). At the same time, the collet portion 52 imparts an axial force against the seal portion 48 to drive the seal portion 48 into sealing engagement with the frusto-conical sealing surface 458 of the second frusto-conical chamber 454 of the threaded housing 404. As such, the seal portion 48 is sealingly engaged with the threaded housing 404 while the collet portion 52 is releasably secured on the tubing 420.

The use of a hybrid ferrule between the lock nut 412 and the threaded housing 404 helps distribute the holding force on the back of the tubing while providing a sealed connection between the lock nut 412 and the threaded housing 404. More specifically, the hybrid ferrule 40, as opposed to a single-ended collet (such as collet 216 shown in FIGURE 8A), distributes the load across two portions of the back of the tubing, or across the collet portion 52 and the seal portion 48. The inventors of the present application have found this distribution of the back load beneficial in at least certain applications.

For instance, when hand-tightening the lock nut 412 into the threaded housing 404, the force on the end of 1.6 mm (1/16 inch (1/16")) tubing is about four times the force on the end of a 0.8 mm (1/32 inch (1/32")) tubing. The increased force on the end of the tubing can cause the tubing to come out of the fitting port (such as cylindrical chamber 230 of threaded fitting 208), losing the zero dead volume connection. The hybrid ferrule 40 distributes the load across two points of the tubing for greater gripping force, thereby helping to prevent the tubing from being pulled out of the cylindrical chamber, and helping to maintain the zero dead volume connection even at extremely high pressures.

Moreover, if the fitting is used with polymer-clad fused silica tubing, polymer-sleeved fused silica tubing, etc., the distributed load of the hybrid ferrule 40 will help prevent the polymer outer layer from being permanently or significantly deformed. This can be appreciated from the detailed description of the hybrid ferrule 40 described above. Without permanently or significantly deforming the tubing 420, the hybrid ferrule 40 may be slid off the tubing 420 for re-use.

Referring now to FIGURE 11, the UHPLC fitting assembly 500 will now be described. The UHPLC fitting assembly 500 is substantially identical to the fitting assembly 400 in that it includes a lock nut 512 and threaded housing 504 substantially identical to the lock nut 412 and threaded housing 404 of the fitting assembly 400. Moreover, the hybrid ferrule 40 is sealingly disposed between the threaded housing 504 and a second fitting, such as threaded fitting 208. However, in the UHPLC fitting assembly 400, a hybrid ferrule 40 is disposed between the nut 412 and threaded housing 404. In comparison, the UHPLC fitting assembly 500 includes a double-ended collet 518 disposed between the lock nut 512 and threaded housing 504.

The double-ended collet 518 includes first and second tapered opposing ends 520 and 522 that substantially mirror one another. Each of the first and second opposing tapered ends 520 and 522 are substantially identical to the collet 216 described above (and therefore, the collet portion 52 of the hybrid ferrule 40). In that regard, each tapered opposing end 520 and 522 extends axially from an annular central portion 524. The first and second tapered opposing ends 520 and 522 are suitably sized and shaped to be sealingly received within the second and third frusto-conical chambers 554 and 552. Moreover, each tapered opposing end 520 and 522 includes a plurality of axial slots (not labeled) that define axially extending fingers (not labeled). The fingers deform or contract radially onto the tubing when an external force is exerted onto the fingers by the female, frusto-conical chambers 554 and 552 of the threaded housing 504 and the lock nut 512.

The double-ended collet 518 grips onto the tubing along the first and second tapered opposing ends 520 and 522 when received within the frusto-conical chambers 554 and 552. As such, the gripping force of the double-ended collet 518 is distributed over two areas of the tubing. Thus, the double-ended collet 518 distributes the load across two points for greater gripping force, thereby helping to prevent the tubing from being pulled out of the fitting port (such as cylindrical chamber 230), maintaining the zero dead volume connection even at extremely high pressures. Moreover, the collet 518 grips onto the tubing through the deformable fingers without driving the tubing further towards the port bottom, preventing any fracturing of the tubing end.

As can be appreciated from the above description of the collet 216 and the collet portion 52 of the hybrid ferrule 40, the double-ended collet 518 is made from a Titanium alloy or another suitable material that allows the fingers to deform onto the tubing, yet spring back into their original position when the lock nut 512 is disengaged from the threaded housing 504. In this manner, the double-ended collet 518 may be readjusted or removed from the tubing as needed. Moreover, the double-ended collet 518 does not form a hard swage on the tubing.

However, as noted above with respect to the collet 216, the double-ended collet 518 may instead be formed from any other suitable material, such as stainless steel, a polymeric material such as PEEK, glass, Nylon, other any other suitable material. Moreover, the double-ended collet 518 may be made from a combination of materials, such as glass or a suitable metal (such as Titanium alloy) molded within a polymeric material. Thus, it should be appreciated that the double-ended collet 518 described and illustrated herein is exemplary only, and the claimed subject should not be seen as limited in scope.

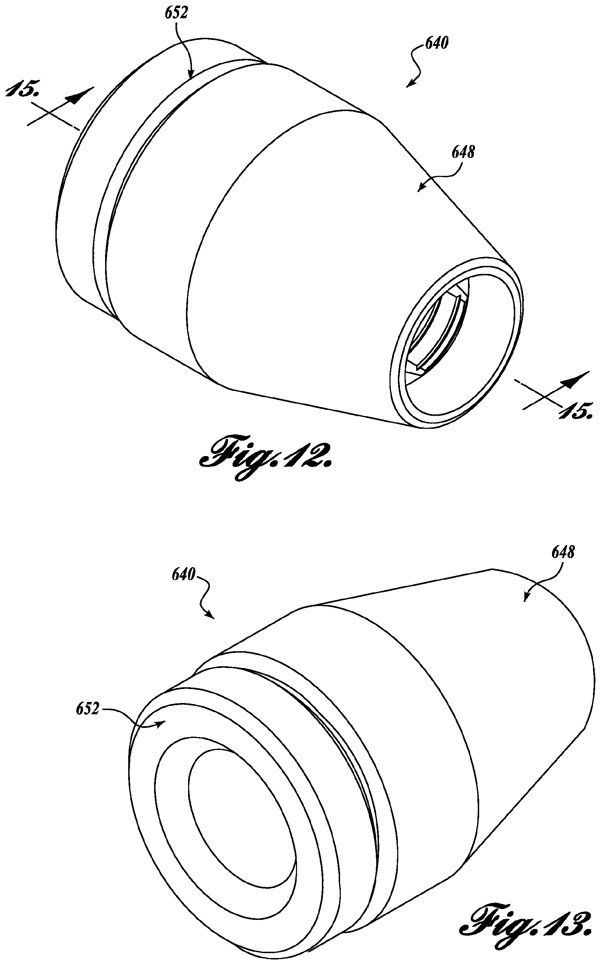

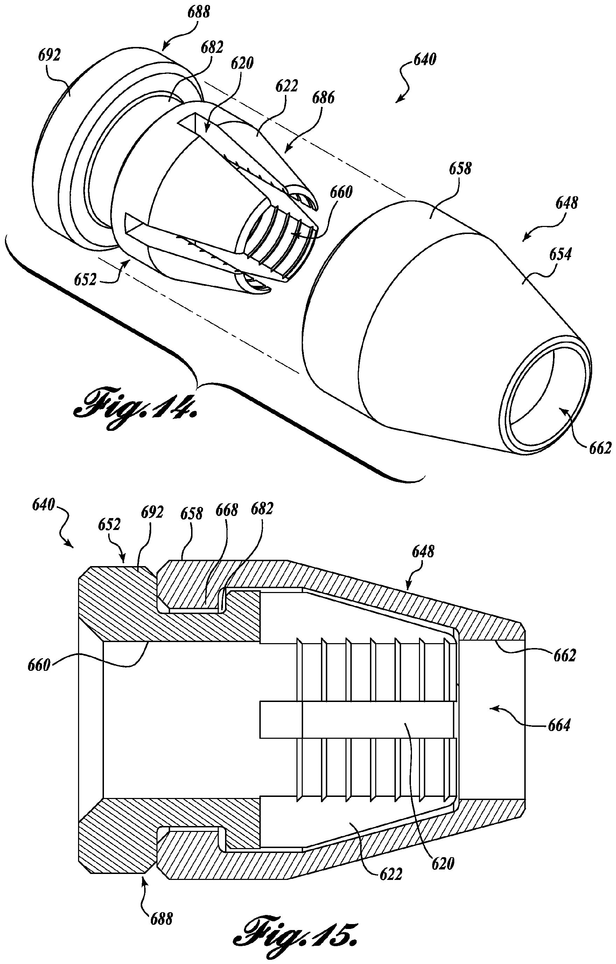

Referring to FIGURES 12-15, an inverted hybrid ferrule 640 for use with one or more of the fitting assemblies of the present disclosure will now be described. The inverted hybrid ferrule 640 is suitable for sealing within a fitting assembly of an HPLC or UHPLC system and adjustably securing onto the tubing of the system without significantly deforming the tubing. In particular, the inverted hybrid ferrule 640 is suitable for use in HPLC and UHPLC systems that use 0.8 mm (1/32 inch (1/32")) tubing. However, it should be appreciated that the inverted hybrid ferrule 640 may instead be used with or adapted for tubing of any suitable size.

Furthermore, similar to the hybrid ferrule 40, the inverted hybrid ferrule 640 is suitable for use with any suitable tubing material, such as stainless steel, nickel, or other metal tubing, polymer-clad fused silica tubing (e.g., PEEKsil™ tubing available from SGE Analytical Science of Austin, Texas), polymer-sleeved fused silica tubing, other types of silica tubing, or other suitable types of tubing used in HPLC and UHPLC systems.

The inverted hybrid ferrule 640 is similar to the hybrid ferrule 40 described above in that it includes a seal portion 648 and a collet portion 652. However, the hybrid ferrule 40 is a double-ended assembly, meaning the tapered collet portion 52 extends axially opposite the tapered seal portion 48. The inverted hybrid ferrule 640, on the other hand, is a single-ended assembly, with the tapered collet portion 652 disposed within the tapered seal portion 648.

The seal portion 648 is substantially identical to the seal portion 48 of the hybrid ferrule 40 described above. In that regard, the seal portion 648 is formed from a material suitable for sealing within a fitting assembly, such as Polyetheretherketone (PEEK). The seal portion 648 is generally a frusto-conical or cone shape and defines a tapered end 654 extending from a substantially cylindrical end 658. The tapered end 654 is suitably sized and shaped to be received within a female, cone-shaped chamber of a fitting, such as the cone-shaped chamber 226 of fitting 208 (see FIGURE 8A).

The seal portion 648 further includes an annular collet-engaging protrusion 668 defined on the interior of the cylindrical end 658. The annular collet-engaging protrusion 668 is sized and configured to be received within a correspondingly shaped exterior annular groove 682 of the collet portion 652 to secure the collet portion 652 within the seal portion 648.

The collet portion 652 is substantially similar to the collet portion 52 of the hybrid ferrule 40. In that regard, the collet portion 652 is made of a suitable metal, such as Titanium alloy, and is of a generally frusto-conical or cone shape. The collet portion 652 includes a tapered end 686 extending from a seal portion-engaging end 688. The tapered end 686 is suitably sized and shaped to be received within a correspondingly-shaped frusto-conical interior of the seal portion 648.

The collet portion 652 and the seal portion 648 define first and second interior axial bore portions 660 and 662, respectively. The first and second interior axial bore portions 60 and 62 are substantially identical in diameter and cross-sectional shape such that when the tapered end 686 of the collet portion 652 is received within the tapered end 654 of the seal portion 648, the first and second interior axial bore portions 660 and 662 define a substantially smooth interior cylindrical passageway 664 of constant diameter for slidably receiving a portion of a UHPLC fluid conduit therein. However, a portion or all of the first and second interior axial bore portions 660 and 662 may define interior surfaces that are textured, grooved, threaded, etc., to aid in gripping onto the exterior surface of the tubing.

The collet portion 652 further includes a plurality of axial slots 620 extending along at least a portion of the tapered end 686 to define a plurality of axially extending fingers 622. Preferably, the collet portion 652 includes four axial slots 620 spaced equidistant from one another circumferentially about the tapered end 686 to define four substantially identical axially extending fingers 622. However, it should be appreciated that any suitable number of axially extending fingers 622 may be used. In any event, it is preferred that a suitable number of fingers be defined and the fingers be of a suitable width and length such that they may be deformed onto tubing when engaged by a fitting assembly without breaking off from the collet portion 652.

The fingers 622 deform or contract radially onto tubing when an external axial force is exerted on the fingers 622 by the female, cone-shaped chamber of a fitting asembly. In this manner, the collet portion 652 is secured onto the tubing to prevent the tubing from ejecting at extreme pressures. With the collet portion 652 being made from a Titanium alloy or another suitable material, the fingers 622 spring back into their original position when the fitting is loosened or disassembled such that the tubing may be readjusted or removed from the inverted hybrid ferrule 640. In addition, the collet portion 652 does not form a hard swage on tubing such as stainless steel tubing.

As noted above, an annular collet-engaging protrusion 668 of the seal portion 648 is sized and configured to be received within a correspondingly shaped exterior annular groove 682 of the collet portion 652 to secure the collet portion 652 within the seal portion 648. The exterior annular groove 682 of the collet portion 652 may be defined between the tapered end 686 and an enlarged cylindrical end 692 opposite the tapered end 686. The collet-engaging protrusion 668 of the seal portion 648 is received within the annular groove 682 of the collet portion 652 when the tapered end 686 of the collet portion 652 is received within the tapered end 654 of the seal portion 648. In this manner, the collet portion 652 and seal portion 648 may be "snap fit" together to define the inverted hybrid ferrule 640. The enlarged cylindrical end 692 of the collet portion 652 may be substantially the same size and shape as the cylindrical end 658 of the seal portion 648 to define a substantially smooth exterior transition between the collet portion 652 and the seal portion 648 when mated together.

Moreover, with the collet portion 652 being made from Titanium (or the like) and the seal portion 648 being made from PEEK (or the like), the collet portion 652 and seal portion 648 are preferably permanently secured together once assembled. In any event, it is preferred that the seal portion 648 be sufficiently secured to the collet portion 652 such that the inverted hybrid ferrule 640 remains intact (the seal portion 648 remains connected to the collet portion 652) when removing the inverted hybrid ferrule 640 from a fitting. Moreover, it should be appreciated that the seal portion 648 may instead be molded or otherwise formed on the collet portion 652 in any manner well known in the art.

With the seal portion 648 being made from a suitable material such as PEEK, the tapered end 654 of the seal portion 648 seals against the fitting and the axial bore 662 of the seal portion 648 seals around the tubing (such as stainless steel tubing or other suitable tubing) to form a liquid-tight fitting seal without significantly deforming the tubing. The axial bore 662 of the seal portion 648 forms a soft swage on the tubing so that the inverted hybrid ferrule 640 can be repositioned on the tubing and reused in other fittings.

Moreover, as noted above, the collet portion 652 is formed from a material suitable for gripping onto the tubing of the fitting assembly, such as hardened Titanium alloy. Thus, the hardened Titanium collet portion 652 married to the softer PEEK seal portion 648 provides an inverted hybrid ferrule 640 that seals into a female, cone-shaped chamber of a fitting while providing the grip necessary to prevent the tubing from ejecting at high pressures. Moreover, the inverted hybrid ferrule 640 secures onto the tubing without swaging irreversibly onto the tubing.

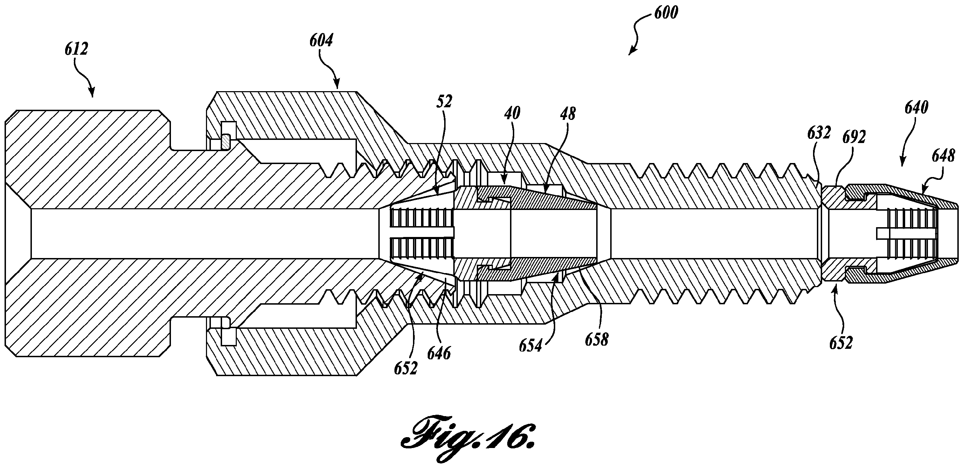

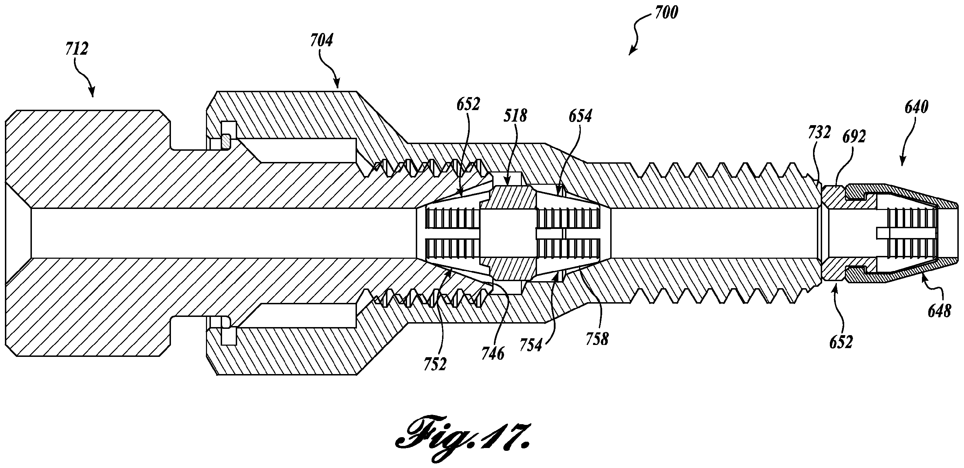

The inverted hybrid ferrule 640 may be used in any suitable fitting assembly having a female, cone-shaped chamber, either alone or in combination with other ferrules, collets, or ferrule and/or collet assemblies. For instance, the inverted hybrid ferrule 640 may be used in any of the fitting assemblies described above with respect to FIGURES 6-11. Moreover, the inverted hybrid ferrule 640 may be used with any suitable type of tubing material as noted above. As non-limiting examples, the inverted hybrid ferrule 640 is shown in use with fourth and fifth exemplary embodiments of UHPLC fitting assemblies 600 and 700 shown in FIGURES 16 and 17, which will now be described.

Referring first to FIGURE 16, the UHPLC fitting assembly 600 is substantially similar to the fitting assembly 400 except for the differences hereinafter provided. The UHPLC fitting assembly 600 includes a lock nut 612 receivable within a first end of a threaded housing 604, with a hybrid ferrule 40 sealingly disposed between the lock nut 612 and the threaded housing 604. The lock nut 612 and threaded housing 604 are substantially identical to the lock nut 412 and threaded housing 404 of the fitting assembly 400. However, in the UHPLC fitting assembly 600, an inverted hybrid ferrule 640 is disposed at the second end of the threaded housing 404 for engagement with a frusto-conical chamber of a fitting (such as frusto-conical chamber 228 of a fitting 208, or similar).

In that regard, the second end of the threaded housing 604 does not define a frusto-conical chamber for receiving and engaging the inverted hybrid ferrule 640. Rather, the second end of the threaded housing 604 defines a collet-engaging portion 632 that is configured to engage and impart an axial force on the enlarged end 692 of the collet portion 652. In this manner, the inverted hybrid ferrule 640 can be driven into a frusto-conical chamber of a fitting and compressed onto the tubing in the fitting.

The combination of a back hybrid ferrule 40 and a front inverted hybrid ferrule 640 reversibly seals the fitting assembly components onto the tubing without damaging or significantly deforming the tubing. In this manner, the ferrules 40 and 640 may easily slide off the tubing for re-use within the same or different fitting assembly.

With regards to the back hybrid ferrule 40, when the lock nut 612 is tightened within the threaded housing 604, the hybrid ferrule 40 is secured in its position on the tubing. More specifically, by tightening the lock nut 612 within the threaded housing 604 (i.e., in an engaged position), the lock nut 612 imposes an axial force on the collet portion 52 of the hybrid ferrule 40 through collet-engaging frusto-conical surface 646 of the frusto-conical chamber 652. The collet portion 52 drives the PEEK seal portion 48 into sealing engagement with the frusto-conical sealing surface 658 of the threaded housing 604. At the same time, the collet-engaging frusto-conical surface 646 compresses the fingers of the collet portion 52 onto the tubing to securely position the hybrid ferrule 40 on the tubing and to secure the position of the tubing within the fitting assembly 600. Thus, the seal portion 48 is sealingly engaged with the threaded housing 604 while the collet portion 52 is releasably secured on the tubing.

As noted above with respect to fitting assembly 400 of FIGURE 10, the use of a hybrid ferrule 40 between the lock nut and the threaded housing helps distribute the holding force of the ferrule 40 across two portions of the tubing while providing a sealed connection between the lock nut and the threaded housing. By distributing the gripping load over the back of the tubing, the fitting assembly can withstand higher fluid pressures without damaging the tubing.

The front inverted hybrid ferrule 640 also helps prevent deformation of the tubing while releasably securing the front of the tubing within a second fitting. If the tubing is a polymer-clad fused silica tubing or similar, the outer polymer sheath may begin to peel back at the front end of the tubing from the inner glass layer at high pressures. When the outer polymer sheath peels back in this manner, the internal more delicate glass tubing will be exposed and protruding from the sheath. The peeled back sheath leaves dead volume in the bottom of the port fitting, and the exposed glass tubing can easily shatter when trying to re-use the tubing with a new fitting or port.

The inverted hybrid ferrule 640 helps prevent the deformation and peeling of the outer polymer layer. As can be appreciated from the description above as well as the illustrations set forth in FIGURES 12-15, the deformable fingers 622 of the collet portion 652 are near the forward, tapered end of the seal portion 648. In this manner, when the tubing is positioned at the bottom of the port (such as at the bottom of the cylindrical chamber 230 of fitting 208) and sealed within the port by the seal portion 648, the fingers 622 of the collet portion 652 can grip onto the front of the tubing closer to the bottom of the port. This front end grip helps prevent deformation of the outer polymer sheath and peeling of the polymer sheath from the inner glass tubing at the end of the tubing.

Referring to FIGURE 17, the UHPLC fitting assembly 700 is substantially similar to the fitting assembly 600 except that a double-ended collet 518 is disposed between the lock nut 712 and the threaded housing 704 rather than a hybrid ferrule 40. The benefits of the front inverted hybrid ferrule 640 can be appreciated from the foregoing description of the fitting assembly 600. Moreover, the benefits of using a back double-ended collet 518 between the lock nut 712 and the threaded housing 704 are described above with reference to the fitting assembly 500 of FIGURE 11. Thus, the combination of the back double-ended collet 518 and a front inverted hybrid ferrule 640 provide at least the benefits described above.

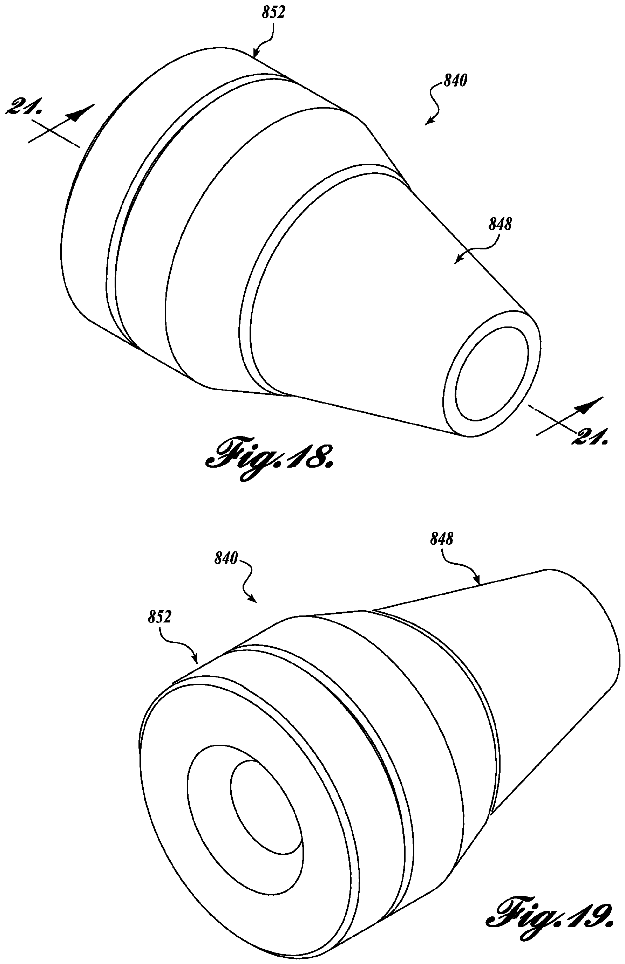

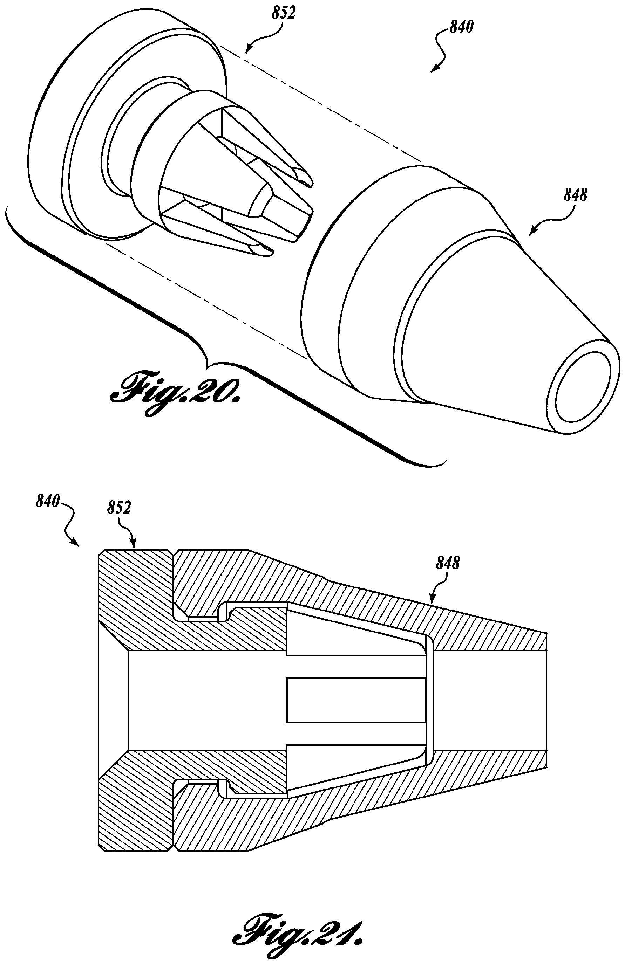

Referring to FIGURES 18-21, an alternate example of an inverted hybrid ferrule 840 for use with one or more of the fitting assemblies of the present disclosure will now be briefly described. The inverted hybrid ferrule 840 is substantially identical to the inverted hybrid ferrule 640 described above. In that regard, the inverted hybrid ferrule 840 is suitable for use in fluid transfer assemblies for scientific instruments such as HPLC and UHPLC systems. However, the inverted hybrid ferrule 840 is particularly suitable for use in HPLC and UHPLC systems that use 1/32 inch (1/32") tubing. However, it should be appreciated that the inverted hybrid ferrule 840 may instead be used with or adapted for tubing of any suitable size.

Furthermore, similar to the inverted hybrid ferrule 640, the inverted hybrid ferrule 840 is suitable for use with any suitable tubing material, such as stainless steel, nickel, or other metal tubing, polymer-clad fused silica tubing (e.g., PEEKsil™ tubing available from SGE Analytical Science of Austin, Texas), polymer-sleeved fused silica tubing, other types of silica tubing, or other suitable types of tubing used in HPLC and UHPLC systems.

The inverted hybrid ferrule 840 is similar to the inverted hybrid ferrule 640 described above in that it includes a seal portion 848 and a collet portion 852. However, the seal portion 848 and collet portion 852 are shaped and sized for use with a 1/32" tubing fitting assembly. The overall configuration and functional aspects of the inverted hybrid ferrule 840 are substantially similar to the inverted hybrid ferrule 640; and therefore, the inverted hybrid ferrule 840 will not be further described in detail.

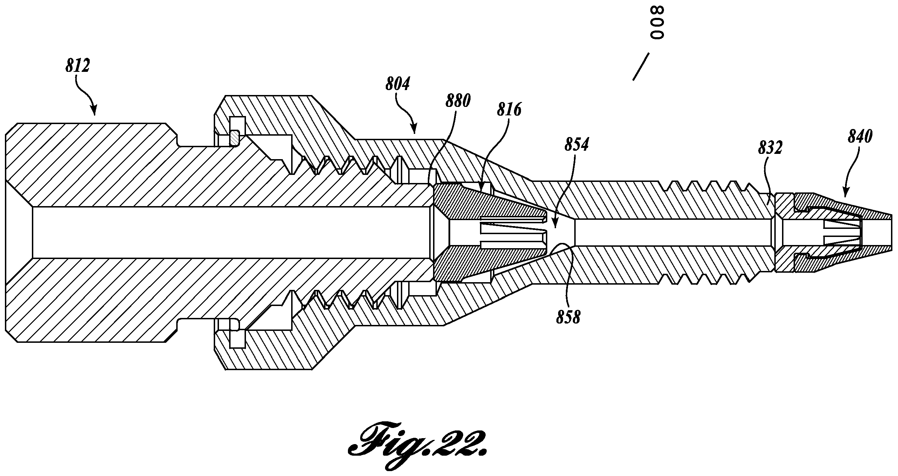

FIGURE 22 depicts an sixth exemplary embodiment of a UHPLC fitting assembly 800. The fitting assembly 800 is substantially identical to the fitting assembly 300 of FIGURE 9 in that it includes a single-ended collet 816 sealingly disposed between the lock nut 812 and the threaded housing 804. In that regard, the back collet 816 provides the same benefits as those described above with respect to collets 216 and 316 of fitting assemblies 200 and 300.

However, unlike the fitting assembly 300 of FIGURE 9, the fitting assembly 800 includes a front inverted hybrid ferrule 840 disposed at the second end of the threaded housing 804 for engagement with a frusto-conical chamber of a fitting (such as frusto-conical chamber 228 of a fitting 208, or similar). In that regard, the second end of the threaded housing 804 defines a collet-engaging portion 832 that is configured to engage and impart an axial force on the collet portion 852 of the inverted hybrid ferrule 840. In this manner, the inverted hybrid ferrule 840 can be driven into a frusto-conical chamber of a fitting and compressed onto the tubing in the fitting.

The combination of a back single-ended collet 816 and a front inverted hybrid ferrule 840 reversibly seals the fitting assembly components onto the tubing without damaging or significantly deforming the tubing. In this manner, the collet 816 and ferrule 840 may easily slide off the tubing for re-use within the same or different fitting assembly.

With regards to the back single-ended collet 816, when the lock nut 812 is tightened within the threaded housing 804, the single-ended collet 816 is compressed onto the tubing and secured in its position on the tubing. As can be appreciated from the description of collets 216 and 316 above, the collet 816 is releasably secured onto the tubing without forming a hard swage on the tubing and without driving the tubing forward within the fitting (towards the bottom of the port).

The front inverted hybrid ferrule 840 helps prevent deformation of the tubing while releasably securing the tubing within a second fitting. As noted above, if the tubing is a polymer-clad fused silica tubing or similar, the outer polymer sheath may begin to peel back at the end of the tubing from the inner glass layer at high pressures. When the outer polymer sheath peels back in this manner, the internal more delicate glass tubing will be exposed and protruding from the sheath. The peeled back sheath leaves dead volume in the bottom of the port fitting, and the exposed glass tubing can easily shatter when trying to re-use the tubing with a new fitting or port.

The inverted hybrid ferrule 840 helps prevent the deformation and peeling of the outer polymer layer since the deformable fingers of the collet portion 852 are near the forward, tapered end of the seal portion 848. In this manner, when the tubing is positioned at the bottom of the port (such as at the bottom of the cylindrical chamber 230 of fitting 208) and sealed within the port by the seal portion 848, the fingers of the collet portion 852 can grip onto the tubing closer to the bottom of the port. This end grip helps prevent deformation of the outer polymer sheath and peeling of the polymer sheath from the inner glass tubing at the end of the tubing.

It should be appreciated that the combinations of ferrules, collets, ferrule assemblies, and collet assemblies shown in use with the fitting assemblies of FIGURES 6-11, 16-17, and 22, may be rearranged or configured in any other suitable manner, may be combined with aspects of other fitting assemblies, or may instead be used in isolation. As a non-limiting example, the hybrid ferrule 40 and inverted hybrid ferrules 640 and 840 may be used with any suitable back ferrule or single or double-ended collet assembly between the lock nut and the threaded housing. Moreover, the fitting assembly may include both front and back hybrid ferrules 40, front and back inverted hybrid ferrules 640 and 840, or combinations of both.

As another non-limiting example, the fitting assembly may include a front polymeric ferrule, such as ferrule 320 described above with reference to FIGURE 9, and a back single or double-ended collet assembly, hybrid ferrule 40, or inverted hybrid ferrule 640 or 840 between the lock nut and the threaded housing. Thus, it should be appreciated that the fitting assemblies shown and described with respect to FIGURES 6-11, 16-17, and 22 are exemplary only, and are not intended to limit the scope of the claimed subject matter.

Moreover, as can be appreciated from the description set forth above, the fitting assemblies shown and described with respect to FIGURES 6-11, 16-17, and 22 may be used with any suitable tubing size (e.g., 1/16", 1/32", etc.) for HPLC and UHPLC assemblies, and with any suitable tubing material (e.g., polymer-clad fused silica tubing, polymer-sleeved fused silica tubing, or other types of silica tubing, stainless steel, nickel, or other metal tubing, etc.). Furthermore, the fitting assemblies may also be configured for being tightened by hand or configured to be tightened with a tool, such as a wrench. Thus, it can be appreciated by one of ordinary skill that the type of collet/ferrule assembly used may be adapted or configured for the intended use of the fitting assembly.

While the preferred embodiment of the invention has been illustrated and described, it will be appreciated that various changes can be made therein without departing from the scope of the appended claims.

## Claims

1. A fitting assembly (200, 400, 500, 600, 700, 800) for use in a fluid transfer assembly having a fluid conduit, the fitting assembly comprising:
(a) a first fitting (204, 404, 504, 604, 704, 804) having first and second ends and a bore extending between the first and second ends for receiving the fluid conduit, the first end configured to sealingly dispose a ferrule assembly (40, 640, 840) within a second fitting (208) in an engaged position;
wherein the first end of the first fitting is configured to bias the ferrule assembly into releasable locking engagement with the fluid conduit in the engaged position,
wherein the ferrule assembly comprises:
(i) a frusto-conical seal portion (48, 648, 848) having a tapered end, an enlarged end, and a first bore sized and configured to receive the fluid conduit, the seal portion formed from a first material; and
(ii) a frusto-conical collet portion (52, 652, 852) having a tapered end and an enlarged end, the enlarged end of the collet portion mated with the enlarged end of the seal portion, the collet portion having a second bore in substantial alignment with the first bore, the collet portion including at least one axial finger extending along the tapered end that is configured to be biased into locking engagement with the fluid conduit, wherein the collet portion is formed from a second material;
(b) a third fitting (212, 412, 512, 612, 712, 812) having first and second ends and a bore extending between the first and second ends for receiving the fluid conduit, the first end configured to sealingly dispose a collet assembly (216, 40, 518, 816) within the first fitting in an engaged position.

2. The fitting assembly of Claim 1, wherein the tapered end of the frusto-conical collet portion is disposed within an interior of the frusto-conical seal portion.

3. The fitting assembly of Claim 1 or 2, wherein the ferrule assembly comprises a ferrule having a bore for receiving the fluid conduit, a tapered end, and an enlarged end, and wherein the ferrule is made from a polymeric material.

4. The fitting assembly of Claim 1, 2 or 3, wherein the first end of the third fitting is configured to bias the collet assembly into releasable locking engagement with the fluid conduit in the engaged position.

5. The fitting assembly of Claim 4, wherein the collet assembly comprises a single-ended collet having a bore for receiving the fluid conduit, the collet having a tapered end, an enlarged end, and at least one axial finger extending along the tapered end that is configured to be biased into locking engagement with the fluid conduit, the enlarged end engageable by the first end of the third fitting.

6. The fitting assembly of Claim 4, wherein the collet assembly comprises a double-ended collet having a bore for receiving the fluid conduit, the collet having a first tapered end extending from an enlarged central portion, a second tapered end extending from the enlarged central portion opposite the first tapered end, and at least one axial finger extending along each of the first and second tapered ends that is configured to be biased into locking engagement with the fluid conduit.

7. The fitting assembly as in Claims 4, 5 or 6, wherein the collet assembly is formed from a material chosen from the group consisting of a Titanium alloy, stainless steel, a polymer, or a combination thereof.

8. The fitting assembly of one of the Claims 1 to 7, wherein the third fitting is moveable into a disengaged position to move the collet assembly out of sealing engagement with the first fitting.

9. The fitting assembly of Claim 8, further comprising a capture assembly (290) configured to retain the third fitting within a portion of the first fitting in the disengaged position.

10. The fitting assembly of one of the Claims 1 to 9, wherein the fluid conduit is a silica conduit.

11. A method for assembling a fitting assembly for use in a fluid transfer assembly having a fluid conduit, the method comprising:
(a) disposing a fluid conduit within the bores of a first fitting, a collet assembly, a third fitting, and a ferrule assembly;
(b) positioning the fluid conduit within a chamber of a second fitting;
(c) engaging a first end of the first fitting with a portion of the second fitting to sealingly dispose the ferrule assembly within the second fitting; and
(d) engaging a first end of the third fitting with a portion of the first fitting to sealingly dispose the collet assembly within the first fitting,
wherein the first end of the first fitting is configured to bias the ferrule assembly into releasable locking engagement with the fluid conduit when the first end of the first fitting engages a portion of the second fitting,
wherein the ferrule assembly comprises:
(i) a frusto-conical seal portion having a tapered end, an enlarged end, and a first bore sized and configured to receive the fluid conduit, the seal portion formed from a first material; and
(ii) a frusto-conical collet portion having a tapered end and an enlarged end, the enlarged end of the collet portion mated with the enlarged end of the seal portion, the collet portion having a second bore in substantial alignment with the first bore, the collet portion including at least one axial finger extending along the tapered end that is configured to be biased into locking engagement with the fluid conduit, wherein the collet portion is formed from a second material.

12. The method of Claim 11, wherein the ferrule assembly comprises a ferrule having a bore for receiving the fluid conduit, a tapered end, and an enlarged end, and wherein the ferrule is made from a polymeric material.

13. The method as in Claims 11 or 12, wherein the collet assembly is formed from a material chosen from the group consisting of a Titanium alloy, stainless steel, a polymer, or a combination thereof.

14. The method of Claims 11, 12 or 13, further comprising disengaging the third fitting from the first fitting to move the collet assembly out of sealing engagement with the first fitting.

15. The method of Claim 14, further comprising retaining the third fitting within a portion of the first fitting in the disengaged position.

## Patentansprüche

1. Anschlussstückanordnung (200, 400, 500, 600, 700, 800) zur Verwendung in einer Fluidtransferanordnung aufweisend eine Fluidleitung, wobei die Anschlussstückanordnung umfasst:
(a) ein erstes Anschlussstück (204, 404, 504, 604, 704, 804) aufweisend ein erstes und ein zweites Ende und eine Bohrung die sich zwischen dem ersten und dem zweiten Ende erstreckt zur Aufnahme der Fluidleitung, wobei das erste Ende dazu angepasst ist eine Hülsenanordnung (40, 640, 840) dichtend in einem zweiten Anschlussstück (208) in einer Eingriffsposition anzuordnen;
wobei das erste Ende des ersten Anschlussstücks dazu angepasst ist die Hülsenanordnung in einen lösbaren Verriegelungseingriff mit der Fluidleitung in der Eingriffsposition vorzuspannen,
wobei die Hülsenanordnung umfasst:
(i) einen kegelstumpfförmigen Dichtungsabschnitt (48, 648, 848) aufweisend ein konisches Ende, ein vergrößertes Ende, und eine erste Bohrung die dazu bemessen und ausgebildet ist die Fluidleitung aufzunehmen, wobei der Dichtungsabschnitt aus einem ersten Material gebildet ist; und
(ii) einen kegelstumpfförmigen Klemmbuchsenabschnitt (52, 652, 852) aufweisend ein konisches Ende und ein vergrößertes Ende, wobei das vergrößerte Ende des Klemmbuchsenabschnitts mit dem vergrößerten Ende des Dichtungsabschnitts in Eingriff steht, wobei der Klemmbuchsenabschnitt eine zweite Bohrung im Wesentlichen fluchtend mit der ersten Bohrung aufweist, wobei der Klemmbuchsenabschnitt zumindest einen axialen Finger aufweist welcher sich entlang des konischen Endes erstreckt der dazu angepasst ist in Verriegelungseingriff mit der Fluidleitung vorgespannt zu werden, wobei der Klemmbuchsenabschnitt aus einem zweiten Material gebildet ist;
(b) ein drittes Anschlussstück (212, 412, 512, 612, 712, 812) aufweisend ein erstes und ein zweites Ende und eine Bohrung die sich zwischen dem ersten und dem zweiten Ende erstreckt zur Aufnahme der Fluidleitung, wobei das erste Ende dazu angepasst ist eine Klemmbuchsenanordnung (216, 40, 518, 816) dichtend in dem ersten Anschlussstück in einer Eingriffsposition anzuordnen.

2. Die Anschlussstückanordnung nach Anspruch 1, wobei das konische Ende des kegelstumpfförmigen Klemmbuchsenabschnittes innerhalb eines Innenbereichs des kegelstumpfförmigen Dichtungsabschnittes angeordnet ist.

3. Die Anschlussstückanordnung nach Anspruch 1 oder 2, wobei die Hülsenanordnung eine Hülse mit einer Bohrung zur Aufnahme der Fluidleitung, einem konische Ende, und einem vergrößerten Ende aufweist, und wobei die Hülse aus einem Polymermaterial hergestellt ist.

4. Die Anschlussstückanordnung nach Anspruch 1, 2 oder 3, wobei das erste Ende des dritten Anschlussstücks dazu angepasst ist die Klemmbuchsenanordnung in einen lösbaren Verriegelungseingriff mit der Fluidleitung in der Eingriffsposition vorzuspannen.

5. Die Anschlussstückanordnung nach Anspruch 4, wobei die Klemmhülsenanordnung eine ein-endige Klemmhülse mit einer Bohrung zur Aufnahme der Fluidleitung aufweist, wobei die Klemmhülse aufweist ein konisches Ende, ein vergrößertes Ende und zumindest einen axialen Finger welcher sich entlang des konischen Endes erstreckt und dazu angepasst ist in Verriegelungseingriff mit der Fluidleitung vorgespannt zu werden, wobei das vergrößerte Ende durch das erste Ende des dritten Anschlussstücks in Eingriff bringbar ist.

6. Die Anschlussstückanordnung nach Anspruch 4, wobei die Klemmhülsenanordnung eine doppelendige Klemmhülse mit einer Bohrung zur Aufnahme der Fluidleitung aufweist, wobei die Klemmhülse aufweist ein erstes konisches Ende das sich von einem vergrößerten mittleren Abschnitt erstreckt, ein zweites konisches Ende das sich von dem vergrößerten mittleren Abschnitt erstreckt gegenüber dem ersten konischen Ende, und zumindest einen axialen Finger welcher sich entlang jedem der ersten und zweiten konischen Enden erstreckt und dazu angepasst ist in einen Verriegelungseingriff mit der Fluidleitung vorgespannt zu werden.

7. Die Anschlussstückanordnung nach Ansprüchen 4, 5 oder 6, wobei die Klemmhülsenanordnung aus einem Material gebildet ist das aus der Gruppe bestehend aus einer Titanlegierung, rostfreiem Stahl, einem Polymer, oder einer Kombination davon ausgewählt ist.

8. Die Anschlussstückanordnung nach einem der Ansprüche 1 bis 7, wobei das dritte Anschlussstück in eine gelöste Position bewegbar ist, um die Klemmhülsenanordnung aus dichtendem Eingriff mit dem ersten Anschlussstück zu bewegen.

9. Die Anschlussstückanordnung nach Anspruch 8, ferner aufweisend eine Festhalteanordnung (290) die dazu angepasst ist das dritte Anschlussstück in einem Abschnitt des ersten Anschlussstücks in der gelösten Position zu halten.

10. Die Anschlussstückanordnung nach einem der Ansprüche 1 bis 9, wobei die Fluidleitung eine Siliciumdioxidleitung ist.

11. Ein Verfahren zum Herstellen einer Anschlussstückanordnung zur Verwendung in einer Fluidtransferanordnung aufweisend eine Fluidleitung, das Verfahren aufweisend:
(a) anordnen einer Fluidleitung in den Bohrungen eines ersten Anschlussstücks, einer Klemmhülsenanordnung, eines dritten Anschlussstücks, und einer Hülsenanordnung;
(b) positionieren der Fluidleitung in einer Öffnung eines zweiten Anschlussstücks;
(c) in Eingriff bringen eines ersten Endes des ersten Anschlussstücks mit einem Abschnitt des zweiten Anschlussstücks um die Hülsenanordnung dichtend in dem zweiten Anschlussstück anzuordnen; und
(d) in Eingriff bringen eines ersten Endes des dritten Anschlussstücks mit einem Abschnitt des ersten Anschlussstücks, um die Klemmhülsenanordnung dichtend in dem zweiten Anschlussstück anzuordnen,
wobei das erste Ende des ersten Anschlussstücks dazu angepasst ist die Hülsenanordnung in lösbaren Verriegelungseingriff mit der Fluidleitung vorzuspannen wenn das erste Ende des ersten Anschlussstücks in einen Abschnitt des zweiten Anschlussstücks eingreift,
wobei die Hülsenanordnung umfasst:
(i) einen kegelstumpfförmigen Dichtungsabschnitt aufweisend ein konisches Ende, ein vergrößertes Ende, und eine erste Bohrung die dazu bemessen und ausgebildet ist die Fluidleitung aufzunehmen, wobei der Dichtungsabschnitt aus einem ersten Material gebildet ist; und
(ii) einen kegelstumpfförmigen Klemmbuchsenabschnitt aufweisend ein konisches Ende und ein vergrößertes Ende, wobei das vergrößerte Ende des Klemmbuchsenabschnitts mit dem vergrößerten Ende des Dichtungsabschnitts in Eingriff steht, wobei der Klemmbuchsenabschnitt eine zweite Bohrung im Wesentlichen fluchtend mit der ersten Bohrung aufweist, wobei der Klemmbuchsenabschnitt zumindest einen axialen Finger aufweist welcher sich entlang des konischen Endes erstreckt der dazu angepasst ist in Verriegelungseingriff mit der Fluidleitung vorgespannt zu werden, wobei der Klemmbuchsenabschnitt aus einem zweiten Material gebildet ist.

12. Das Verfahren nach Anspruch 11, wobei die Hülsenanordnung eine Hülse mit einer Bohrung zur Aufnahme der Fluidleitung, einem konische Ende, und einem vergrößerten Ende aufweist, und wobei die Hülse aus einem Polymermaterial hergestellt ist.

13. Das Verfahren nach Ansprüchen 11 oder 12, wobei die Klemmhülsenanordnung aus einem Material gebildet ist das aus der Gruppe bestehend aus einer Titanlegierung, rostfreiem Stahl, einem Polymer, oder einer Kombination davon ausgewählt ist.

14. Das Verfahren nach Ansprüchen 11, 12 oder 13, ferner aufweisend lösen des dritten Anschlussstücks von dem ersten Anschlussstück um die Klemmhülsenanordnung aus dichtendem Eingriff mit dem ersten Anschlussstück zu bewegen.

15. Das Verfahren nach Anspruch 14, ferner aufweisend zurückhalten des dritten Anschlussstücks in einem Abschnitt des ersten Anschlussstücks in der gelösten Position.

## Revendications

1. Ensemble de raccords (200, 400, 500, 600, 700, 800) destiné à être utilisé dans un ensemble de transfert de fluide ayant un conduit de fluide, l'ensemble de raccords comportant :
(a) un premier raccord (204, 404, 504, 604, 704, 804) ayant des première et seconde extrémités et un alésage s'étendant entre les première et seconde extrémités pour recevoir le conduit de fluide, la première extrémité étant configurée pour disposer de manière étanche un ensemble de virole (40, 640, 840) dans un deuxième raccord (208) dans une position de mise en prise ;
dans lequel la première extrémité du premier raccord est configurée pour solliciter l'ensemble de virole en engagement de verrouillage libérable avec le conduit de fluide dans la position de mise en prise, dans lequel l'ensemble de virole comporte :
(i) une partie de joint d'étanchéité tronconique (48, 648, 848) ayant une extrémité effilée, une extrémité agrandie, et un premier alésage dimensionné et configuré pour recevoir le conduit de fluide, la partie de joint d'étanchéité étant formée d'un premier matériau ; et
(ii) une partie de douille tronconique (52, 652, 852) ayant une extrémité effilée et une extrémité agrandie, l'extrémité agrandie de la partie de douille étant appariée à l'extrémité agrandie de la partie de joint d'étanchéité, la partie de douille ayant un deuxième alésage en alignement substantiel avec le premier alésage, la partie de douille comprenant au moins un doigt axial s'étendant le long de l'extrémité effilée qui est configuré pour être sollicité en engagement de verrouillage avec le conduit de fluide, dans lequel la partie de douille est formée d'un deuxième matériau ;
(b) un troisième raccord (212, 412, 512, 612, 712, 812) ayant des première et seconde extrémités et un alésage s'étendant entre les première et seconde extrémités pour recevoir le conduit de fluide, la première extrémité étant configurée pour disposer de manière étanche un ensemble de douille (216, 40, 518, 816) dans le premier raccord dans une position de mise en prise.

2. Ensemble de raccords selon la revendication 1, dans lequel l'extrémité effilée de la partie de douille tronconique est disposée dans un intérieur de la partie de joint d'étanchéité tronconique.

3. Ensemble de raccords selon la revendication 1 ou 2, dans lequel l'ensemble de virole comporte une virole ayant un alésage pour recevoir le conduit de fluide, une extrémité effilée et une extrémité agrandie, et dans lequel la virole est fabriquée en un matériau polymère.

4. Ensemble de raccords selon la revendication 1, 2 ou 3, dans lequel la première extrémité du troisième raccord est configurée pour solliciter l'ensemble de douille en engagement de verrouillage libérable avec le conduit de fluide dans la position de mise en prise.

5. Ensemble de raccords selon la revendication 4, dans lequel l'ensemble de douille comporte une douille à une seule extrémité ayant un alésage pour recevoir le conduit de fluide, la douille ayant une extrémité effilée, une extrémité agrandie, et au moins un doigt axial s'étendant le long de l'extrémité effilée qui est configuré pour être sollicité en engagement de verrouillage avec le conduit de fluide, l'extrémité agrandie pouvant être mise en prise par la première extrémité du troisième raccord.

6. Ensemble de raccords selon la revendication 4, dans lequel l'ensemble de douille comporte une douille à deux extrémités ayant un alésage pour recevoir le conduit de fluide, la douille ayant une première extrémité effilée s'étendant à partir d'une partie centrale agrandie, une seconde extrémité effilée s'étendant à partir de la partie centrale agrandie opposée à la première extrémité effilée, et au moins un doigt axial s'étendant le long de chacune des première et seconde extrémités effilées qui est configuré pour être sollicité en engagement de verrouillage avec le conduit de fluide.

7. Ensemble de raccords selon la revendication 4, 5 ou 6, dans lequel l'ensemble de douille est formé à partir d'un matériau choisi dans le groupe comprenant un alliage de titane, un acier inoxydable, un polymère, ou une combinaison de ceux-ci.

8. Ensemble de raccords selon l'une quelconque des revendications 1 à 7, dans lequel le troisième raccord est mobile jusque dans une position libérée pour déplacer l'ensemble de douille hors d'engagement d'étanchéité avec le premier raccord.

9. Ensemble de raccords selon la revendication 8, comportant en outre un ensemble de capture (290) configuré pour retenir le troisième raccord dans une partie du premier raccord dans la position libérée.

10. Ensemble de raccords selon l'une quelconque des revendications 1 à 9, dans lequel le conduit de fluide est un conduit de silice.

11. Procédé pour assembler un ensemble de raccords destiné à être utilisé dans un ensemble de transfert de fluide ayant un conduit de fluide, le procédé comprenant les étapes consistant à :
(a) disposer un conduit de fluide dans les alésages d'un premier raccord, d'un ensemble de douille, d'un troisième raccord, et d'un ensemble de virole ;
(b) positionner le conduit de fluide dans une chambre d'un deuxième raccord ;
(c) mettre en prise une première extrémité du premier raccord avec une partie du deuxième raccord pour disposer de manière étanche l'ensemble de virole dans le deuxième raccord ; et
(d) mettre en prise une première extrémité du troisième raccord avec une partie du premier raccord pour disposer de manière étanche l'ensemble de douille dans le premier raccord,
dans lequel la première extrémité du premier raccord est configurée pour solliciter l'ensemble de virole en engagement de verrouillage libérable avec le conduit de fluide quand la première extrémité du premier raccord vient en prise avec une partie du deuxième raccord,
dans lequel l'ensemble de virole comporte :
(i) une partie de joint d'étanchéité tronconique ayant une extrémité effilée, une extrémité agrandie, et un premier alésage dimensionné et configuré pour recevoir le conduit de fluide, la partie de joint d'étanchéité étant formée à partir d'un premier matériau ; et
(ii) une partie de douille tronconique ayant une extrémité effilée et une extrémité agrandie, l'extrémité agrandie de la partie de douille étant appariée à l'extrémité agrandie de la partie de joint d'étanchéité, la partie de douille ayant un deuxième alésage en alignement substantiel avec le premier alésage, la partie de douille comprenant au moins un doigt axial s'étendant le long de l'extrémité effilée qui est configuré pour être sollicité en engagement de verrouillage avec le conduit de fluide, dans lequel la partie de douille est formée à partir d'un deuxième matériau.

12. Procédé selon la revendication 11, dans lequel l'ensemble de virole comporte une virole ayant un alésage pour recevoir le conduit de fluide, une extrémité effilée et une extrémité agrandie, et dans lequel la virole est fabriquée à partir d'un matériau polymère.

13. Procédé selon la revendication 11 ou 12, dans lequel l'ensemble de douille est formé à partir d'un matériau choisi dans le groupe comprenant un alliage de titane, un acier inoxydable, un polymère, ou une combinaison de ceux-ci.

14. Procédé selon la revendication 11, 12 ou 13, comportant en outre l'étape consistant à libérer le troisième raccord du premier raccord pour déplacer l'ensemble de douille hors d'engagement d'étanchéité avec le premier raccord.

15. Procédé selon la revendication 14, comportant en outre l'étape consistant à retenir le troisième raccord dans une partie du premier raccord dans la position libérée.
